(19) Europäisches Patentamt
European Patent Office
Office européen des brevets

(11) **EP 0 899 539 B1**

(12) **EUROPÄISCHE PATENTSCHRIFT**

(45) Veröffentlichungstag und Bekanntmachung des Hinweises auf die Patenterteilung:
**17.11.2004   Patentblatt 2004/47**

(51) Int Cl.⁷: **G01B 11/00**, G01B 11/14, G01B 11/02, G01B 11/24, G02B 6/38

(21) Anmeldenummer: **98111345.9**

(22) Anmeldetag: **19.06.1998**

(54) **Verfahren sowie Vorrichtung zur Gewinnung von Informationen über mindestens ein Lichtleitfaserende**

Method as well as device for obtaining information about at least one optical fibre end

Procédé ainsi que dispositif pour obtenir des informations sur au moins une extrémité d'une fibre optique

(84) Benannte Vertragsstaaten:
**DE ES FR GB IT SE**

(30) Priorität: **27.08.1997   DE 19737410**

(43) Veröffentlichungstag der Anmeldung:
**03.03.1999   Patentblatt 1999/09**

(73) Patentinhaber: **CCS Technology, Inc.**
**Wilmington, DE 19803 (US)**

(72) Erfinder: **Zamzow, Bert, Dipl.-Ing.**
**81371 München (DE)**

(74) Vertreter: **Epping Hermann & Fischer**
**Ridlerstrasse 55**
**80339 München (DE)**

(56) Entgegenhaltungen:
**EP-A- 0 400 408          EP-A- 0 506 039**

• **PATENT ABSTRACTS OF JAPAN vol. 006, no. 156 (P-135), 17. August 1982 (1982-08-17) & JP 57 073606 A (TOHO DENSHI KK), 8. Mai 1982 (1982-05-08)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Gewinnung von Informationen über die Stirnfläche mindestens eines Lichtleitfaserendes, wobei für das Faserende in mindestens einer Betrachtungsebene eine Faserabbildung erzeugt wird.

Ein Verfahren dieser Art ist aus der EP 0 400 408 A2 bekannt. Dort werden zwei sich gegenüberstehende, miteinander zu verschweißende Faserenden beleuchtet und deren so erzeugte Abbilder mit dem Bildsensor einer Videokamera aufgenommen. Die sich in einem festen Längsabstand gegenüberstehenden Faserenden werden lediglich entlang einer einzigen Meßzeile in Faserlängsrichtung abgetastet, so daß nur dort die Spaltbreite zwischen den Faserenden ermittelt werden kann. Darüberhinausgehende Informationen - wie z.B. über den etwaigen Fehlerwinkel der Stirnfläche jedes einzelnen Faserendes - können mit diesem bekannten Meßverfahren, das lediglich mit einer einzigen Meßzeile in Faserlängsrichtung arbeitet, nicht ermittelt werden.

Der Erfindung liegt die Aufgabe zugrunde, einen Weg aufzuzeigen, wie Informationen über die Stirnfläche mindestens eines Lichtleitfaserendes detaillierter gewonnen werden können. Gemäß der Erfindung wird diese Aufgabe bei einem Verfahren der eingangs genannten Art dadurch gelöst, daß die Faser bezüglich mindestens zweier Meßfenster derart in Position gebracht wird, daß in der jeweiligen Betrachtungsebene der Rand ihrer abgebildeten Stirnfläche von jedem Meßfenster an unterschiedlichen Randstellen mindestens einmal erfaßt oder überschritten wird, daß dabei die Intensitätswerte der Meßfenster aufgenommen und zur Auswertung bereitgestellt werden, und daß durch Vergleich der Intensitätswerte der Meßfenster Informationen über die Faserstirnfläche abgeleitet werden.

Erst dadurch ist es ermöglicht, ein Mehr an Meßinformation über den Verlauf der jeweiligen Faserstirnfläche in einfacher Weise zu erhalten, d.h. es sind detaillierte Aussagen über die tatsächliche Form der jeweiligen Faserstirnfläche möglich.

Besonders bevorzugt läßt sich ein etwaiger Winkelfehler der jeweiligen Faserstirnfläche feststellen und ggf. explizit angeben.

Die Erfindung betrifft weiterhin ein Verfahren zur Gewinnung von Informationen über den Spaltbereich zweier sich gegenüberstehender Lichtleitfaserenden, wobei für die beiden Faserenden in mindestens einer Betrachtungsebene Faserabbildungen erzeugt werden, welches dadurch gekennzeichnet ist, daß die Fasern bezüglich mindestens zweier Meßfenster derart in Position zueinander gebracht werden, daß in der jeweiligen Betrachtungsebene die Ränder ihrer abgebildeten Stirnflächen jeweils von mindestens zwei Meßfenstern an unterschiedlichen Randstellen mindestens einmal erfaßt oder überschritten werden, daß dabei die Intensitätswerte der Meßfenster aufgenommen und zur Auswertung bereitgestellt werden, und daß durch Vergleich der Intensitätswerte der Meßfenster Informationen über beide Faserenden und/oder Spaltbereich abgeleitet werden.

Die Erfindung betrifft auch eine Vorrichtung zur Gewinnung von Informationen über die Stirnfläche mindestens eines Lichtleitfaserendes, wobei für das Faserende in mindestens einer Betrachtungsebene zur Erzeugung einer Faserabbildung optische Abbildungsmittel vorgesehen sind, welche dadurch gekennzeichnet ist, daß für die Faser Positioniermittel derart vorgesehen sind, daß in der jeweiligen Betrachtungsebene der Rand ihrer abgebildeten Stirnfläche von mindestens zwei festgelegten Meßfenstern an unterschiedlichen Randstellen mindestens einmal erfaßbar oder überschreitbar ist und daß eine Rechen- und Auswertevorrichtung zur Aufnahme sowie Auswertung der Intensitätswerte der Meßfenster vorgesehen ist, die durch Vergleich der Intensitätswerte der Meßfenster-Informationen über die Faserstirnfläche ableitet.

Sonstige Weiterbildungen der Erfindung sind in den Unteransprüchen wiedergegeben.

Die Erfindung und ihre Weiterbildungen werden nachfolgend anhand von Zeichnungen näher erläutert.

Es zeigen:

Figur 1         in schematischer sowie vergrößerter Darstellung eine Projektionsebene mit den Schattenbildern zweier sich einander gegenüberstehender Lichtwellenleiter-Faserenden, über deren Stirnflächen Informationen gemäß einer ersten Variante des erfindungsgemäßen Verfahrens gewonnen werden,

Figur 2         teilweise in perspektivischer Darstellung den schematischen Grundaufbau einer Einrichtung zur Durchführung des erfindungsgemäßen Verfahrens,

Figuren 3 bis 6   jeweils anhand von schematischen Schattenbildern zweier sich einander gegenüberstehender Faserenden weitere, bevorzugte Varianten des erfindungsgemäßen Verfahrens zur Gewinnung von Informationen über die Stirnflächen der beiden Faserenden,

Figur 7         in schematischer Darstellung ein Helligkeitsdiagramm, das bei den erfindungsgemäßen Varianten nach den Figuren 3 bis 6 aufgenommen werden kann und der Ermittlung des Gesamtwinkelfehlers zwischen den Stirnflächen der Faserpaare nach den Figuren 3 bis 6 dient,

Figuren 8 bis 10     jeweils anhand der schematischen sowie vergrößerten Abbildung einer Einzelfaser eine weitere Variante zur Durchführung des erfindungsgemäßen Verfahrens,

Figur 11     in schematischer Darstellung ein Helligkeitsdiagramm, das bei der erfindungsgemäßen Variante nach den Figuren 8 bis 10 aufgenommen werden kann und der Ermittlung des Winkelfehlers an der Stirnfläche der Einzelfaser der Figuren 8 bis 10 dient,

Figuren 12 bis 15     weitere Alternativen zur Durchführung des erfindungsgemäßen Verfahrens anhand des schematischen Schattenbilds eines einzelnen Lichtleitfaserendes, und

Figuren 16 bis 19     in schematischer Darstellung eine Möglichkeit zur Dämpfungsmessung zweier miteinander zu verschweißender Lichtleitfaserenden unter Berücksichtigung etwaiger Winkelfehler deren Faserstirnflächen, wobei der Gesamtwinkelfehler nach einer der Varianten des erfindungsgemäßen Verfahrens ermittelt worden ist.

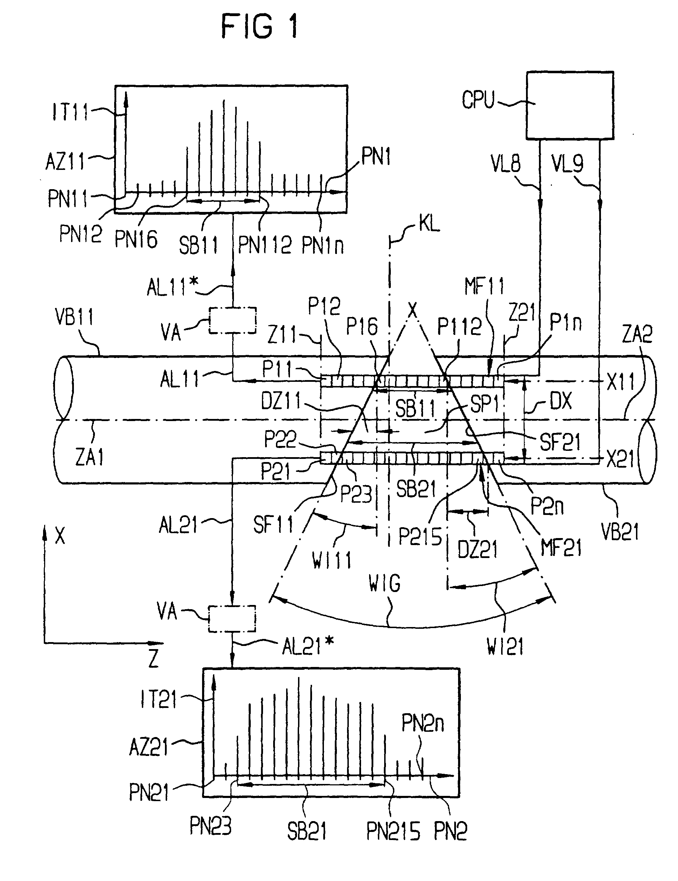

Elemente mit gleicher Funktion und Wirkungsweise sind in den Figuren 1 bis 19 jeweils mit denselben Bezugszeichen versehen.

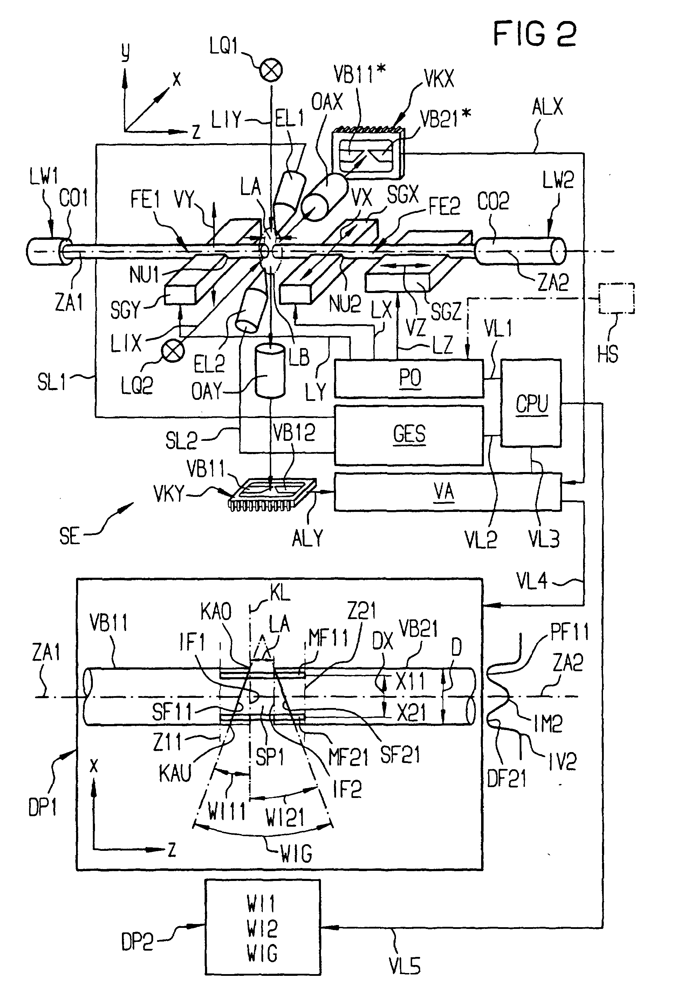

Figur 1 zeigt in schematischer sowie vergrößerter Darstellung eine Projektionsebene X, Z, in der zwei Lichtwellenleiter-Faserenden in Form von zugehörigen Schattenbildern VB11, VB21 abgebildet sind. Diese Faserabbildungen VB11, VB21 können insbesondere mit Hilfe der optischen Aufnahmeeinrichtungen eines Lichtwellenleiter-Spleißgerätes SE gewonnen werden, dessen wesentliche Komponenten in der Figur 2 schematisch dargestellt sind. Dort stehen sich die stirnseitigen Enden des ersten sowie zweiten Lichtwellenleiters LW1, LW2 in einem vorgebbaren axialen Längsabstand gegenüber. Der jeweilige Lichtwellenleiter LW1, LW2 erstreckt sich vorzugsweise entlang einer Geradenlinie. Im Endbereich des jeweiligen Lichtwellenleiters LW1 bzw. LW2 ist dessen äußere KunststoffBeschichtung (= primäres und/oder sekundäres Coating) entlang einer vorgebbaren Endlänge entfernt. Somit ist dort im Endbereich des jeweiligen Lichtwellenleiters LW1 bzw. LW2 das Glasmaterial dessen Lichtleitfaser FE1 bzw. FE2 blank freigelegt.

Diese freigelegten Lichtleitfasern bzw. Faserenden FE1 bzw. FE2 werden in der Schweißeinrichtung SE von Figur 2 jeweils in mindestens einer zugeordneten, entsprechenden Halte- bzw. Positioniereinrichtung bekannter Bauart - wie zum Beispiel Manipulatoren - festgehalten. Im vorliegenden Beispiel ist im einzelnen der ersten Lichtleitfaser FE1 die Halteeinrichtung SGY sowie der zweiten Lichtleitfaser FE2 die Halteeinrichtung SGX zugeordnet. Um die beiden sich in Längsrichtung einander gegenüberstehenden Enden der beiden Lichtleitfasern FE1, FE2 hinsichtlich ihrer Außenkonturen und/oder Faserkerne möglichst fluchtend aufeinander ausrichten zu können, bevor sie miteinander verschweißt werden, ist mindestens eine der beiden Halteeinrichtungen SGY, SGX in mindestens eine Rauamrichtung quer, bevorzugt senkrecht bzw. orthogonal, das heißt lateral zur jeweiligen Faserlängsachse verschiebbar ausgebildet. In der Figur 2 läßt die Halteeinrichtung SGY beispielsweise eine Bewegung in Y-Richtung sowie die zweite Haslteeinrichtung SGX eine Bewegung in X-Richtung eines kartesischen Koordinatensystems X, Y, Z zu. Die Verschiebemöglichkeit der ersten Lichtleitfaser FE1 in Y-Richtung ist dabei durch einen Doppelpfeil VY, die Verschiebemöglichkeit der zweiten Lichtleitfaser FE2 in X-Richtung durch einen Doppelpfeil VX angedeutet.

Um die Faserenden FE1, FE2 zur späteren Bildung einer Schweißverbindung in Faserlängsrichtung aufeinander zufahren und miteinander kontaktieren zu können, ist in der Figur 1 beispielhaft der zweiten Lichtleitfaser FE2 eine zusätzliche Halte- bzw. Positioniereinrichtung SGZ zugeordnet, mit der sich die Lichtleitfaser FE2 in Faserlängsrichtung, das heißt hier in Z-Richtung, gegenüber der ersten, in Z-Richtung feststehenden Lichtleitfaser FE1 verschieben läßt. Die Verschiebebewegung in Z-Richtung ist dabei mit einem Doppelpfeil VZ angedeutet. Jede einzelne Halte- bzw. Positioniereinrichtung SGY, SGX sowie SGZ des Lichtwellenleiter-Schweißgerätes SE von Figur 2 läßt sch jeweils über eine zugehörige Steuerleitung SGY, SGX sowie SGZ durch eine entsprechende Positionssteuereinheit, insbesondere mindestens ein Stellglied PO betätigen und in die jeweilige Rauamrichtung Y, X sowie Z verschieben.

Gegebenenfalls können die Positioniereinrichtungen auch jeweils derart ausgebildet sein, daß sie sich von Hand in die jeweils gewünschte Raumposition bewegen lassen. Insbesondere kann das Stellglied PO auch über eine Handsteuerung HS, die in der Figur 2 strichpunktiert angedeutet ist, Steuersignale zur entsprechenden Verstellung der Positioniereinrichtungen SGY, SGX sowie SGZ erhalten.

Allgemein betrachtet sind also für die beiden miteinander zu verschweißenden Lichtleitfasern FE1, FE2 Positioniereinrichtungen vorgesehen, von denen mindestens eine eine Verschiebebewegung in Faserlängsrichtung und/oder mindestens eine lateral zur jeweiligen Faserlängserstreckung zuläßt. Bevorzugt ermöglichen die Halte- bzw. Positioniereinrichtungen Verschiebebewegungen der beiden Lichtleitfasern in alle drei Raumrichtungen, nämlich X, Y, Z eines kartesischen Koordinatensystems. Die Raumrichtung Z gibt dabei eine Längsrichtung, das heißt gewünschte Soll-Fluchtlinie vor, entlang der die Lichtleitfasern FE1, FE2 bezüglich ihrer Außenkontur und/oder Faserkerne fluchtend aufeinander ausgerichtet werden sollen. Die Raumrichtung X verläuft in Querrichtung zur Längserstreckung der beiden Lichtleitfasern FE12, FE2, insbesondere senkrecht, das heißt orthogonal zur Rauamrichtung Z. Die Positioniereinrichtung SGY, SGX sowie SGZ von Figur 2 liegen vorzugsweise in einer gemeinsamen Lageebene, die etwa parallel zu der von der X-sowie Z-Richtung abgespannten Ebene angeordnet ist. Die Raumrichtung Y steht senkrecht zu dieser X, Z-Ebene, das heißt sie verläuft nach oben oder unten.

Die laterale Ausrichtung der beiden Faserenden FE1, FE2 aufeinander sowie die Einstellung eines definierten Längsabstandes zwischen diesen beiden Faserenden kann vorzugsweise mit Hilfe einer zentralen Rechen- und Steuereinrichtung CPU erfolgen. Diese kann das Stellglied PO über eine Steuerleitung VL1 anweisen, die jeweilige Halteeinrichtung SGY, SGX sowie SGZ entsprechend in Y, X sowie Z-Richtung zu verschieben.

Um für das jeweilige Lichtleitfaserende FE1 bzw. FE2 jeweils ein optisches Abbild in mindestens einer Betrachtungsebene erfassen und dessen Bildinformation zur Auswertung bereitstellen zu können, weist das Lichtwellenleiter-Schweißgerät SE von Figur 2 mindestens ein optisches Abbildungssystem auf. Zur Erzeugung von Projektionsbildern der beiden Faserenden beispielsweise in der X, Z-Ebene werden mit Hilfe der Lichtquelle LQ1 eines ersten Abbildungssystems Lichtstrahlen LIY insbesondere im wesentlichen senkrecht zur X, Z-Ebene, d.h. in Y-Richtung auf die beiden Faserenden FE1, FE2 gerichtet. Dabei tritt durch die Faserenden FE1, FE2 eine Abschattung der Lichtstrahlen LIY ein. Von den beiden Faserenden FE1, FE2 wird also jeweils eine Seitenansicht bei Blickrichtung in Y-Richtung erzeugt. Als Lichtquelle LQ1 kann vorzugsweise eine Leuchtdiode vorgesehen sein. Auf der der Lichtquelle LQ1 gegenüberliegenden Seite der Lichtleitfasern FE1, FE2 ist in der Figur 2 eine Abbildungsoptik OAY, insbesondere ein Objektiv oder sonstiges Linsensystem im Strahlengang der Lichtstrahlen LIY angeordnet. Diese Abbildungsoptik OAY ist der zeichnerischen Einfachheit halber lediglich durch eine einzelne, kreiszylinderförmige Linse angedeutet. Über die Abbildungsoptik OAY des ersten Abbildungssystems werden die Faserenden FE1, FE2 in ihren Schatten VB11, VB21 auf eine Fläche geworfen bzw. in eine Bildebene abgebildet, die in der X, Z-Ebene liegt.

In dieser Projektionsebene werden die Schatten bzw. Projektionen VB11, VB21 der Faserenden FE1, FE2 mit Hilfe einer Aufnahmeeinrichtung VKY, insbesondere Abtasteinrichtung, erfaßt bzw. aufgenommen, so daß für jede Faserabbildung bzw. jedes Schattenbild VB11, VB21 eine Intensitätsverteilung erhalten wird. Als Aufnahmeeinrichtung VKY des ersten Abbildungssystems ist vorzugsweise eine Videokamera vorgesehen, deren Bildsensor insbesondere rechteckförmig ausgebildet ist. Bei dieser Durchleuchtung der Lichtleitfaserenden FE1, FE2 wirkt die jeweilige blanke, das heißt sauber entcoatete Lichtleitfaser wie eine Zylinderlinse für das sie hindurchdringende Licht. Funktion und Wirkungsweise dieses Abbildungssystems sind detailliert in der US 5,011,259 beschrieben. Die Aufnahmeeinrichtung VKY weist vorzugsweise ein Feld von lichtempfindlichen Elementen, insbesondere von Fotodioden auf. Diese lichtempfindlichen Elemente sindin mehreren Zeilen und Spalten angeordnet, die vorzugsweise senkrecht zueinander liegen. Insbesondere ist als Aufnahmeeinrichtung ein Feld von sogenannten CCD-Elementen (Coupled Charge Devices") vorgesehen. Auf diese Weise wird der von der Aufnahmeeinrichtung VKY erfaßte, hier rechteckförmige Bildausschnitt der X, Z-Betrachtungsebene, auf den die beiden Faserabbildungen VB11, VB21 fallen, pixelweise, das heißt mit der gebenen örtlichen Aauflösung der lichtempfindlichen Elemente der Abtasteinrichtung VKY abgetastet. Die Auflösung der Aufnahmeeinrichtung VKY ist dabei insbesondere durch den Abstand sowie die Flächengröße deren lichtempfindlicher Elemente bestimmt. Pro Pixelelement der Abtasteinrichtung VKY wird somit jeweils ein Intensitäts- bzw. Helligkeitswert des Projektionsbildes mit den beiden Faserenden detektiert. Die durch Abtastung gewonnenen Helligkeits- bzw. Intensitätswerte des Bildausschnitts mit den beiden Faserabbildungen werden über eine Leitung ALY zu einer Speichereinrichtung VA, insbesondere zu einer Videobildspeichereinheit, übertragen und dort zu Auswertezwecken festgehalten. Die Speichereinrichtung VA kann dazu über eine Leitung VL3 von der zentralen Rechen- und Steuereinrichtung CPU aus angesteuert werden.

Aus den in der Speichereinrichtung VA abgelegten Intensitäts- bzw. Helligkeitswerten für die Projektionsabbildungen der beiden Faserenden FE1, FE2 können mit Hilfe der zentralen Rechen- und Steuereinrichtung CPU Steuersignale zum Abgleich der Faserenden aufeinander in der X, Z-Ebene gewonnen werden. Daraufhin weist die Recheneinrichtung CPU über die Steuerleitung VL1 das Stellglied PO an, die Halteeinrichtung SGX solange in X-Richtung zu verschieben, bis der etwaige laterale Versatz der Faserabbildungen VB11, VB21 in X-Richtung zu null gemacht wird, so daß dann die Ausrichtung der Lichtleitfasern in der X, Z-Ebene bezüglich ihrer Faserkerne und/oder Außenkonturen weitgehend fluchtend ist.

Zusätzlich oder unabhängig von den Projektionsabbildungen der beiden Faserenden FE1, FE2 in der X, Z-Betrachtungsebene können gegebenenfalls auch Abbildungen der beiden Faserenden FE1, FE2 in einer anderen Lageebene, wie zum Beispiel der Y, Z-Ebene erzeugt werden. Dazu werden bei dem Lichtwellenleiter-Schweißgerät SE von Figur 2 Lichtstrahlen LIX der Lichtquelle LQ2 eines zweiten optischen Abbildungssystems in X-Richtung senkrecht zur Y, Z-Ebene auf die beiden Faserenden FE1, FE2 gerichtet, so daß diese beleuchtet werden. Auf der der Lichtquelle LQ2 gegenüberliegenden Seite der Fasern werden die durch die Faserenden FE1, FE2 abgeschatteten Lichtstrahlen mit Hilfe einer Abbildungsoptik OAX, insbesondere einem Objektiv, in eine Projektionsebene abgebildet, die in der Y, Z-Ebene liegt. Mit Hilfe einer der Aufnahmeeinrichtungen VKY entsprechenden Aufnahmeeinrichtung VKX werden für die beiden beleuchteten Faserenden FE1, FE2 in analoger Weise zur X, Z-Projektionsebene Projektionsabbildungen bzw. Schattenbilder VB11*, VB21* in der Y, Z-Ebene gewonnen. Die Aufnahmeeinrichtung VKX weist insbesondere ein planes, etwa rechteckförmiges Feld einer Vielzahl von lichtempfindlichen Elementen, insbesondere Fotodioden auf. Diese sind vorzugsweise in rechtwinklig zueinander liegenden Zeilen und Spalten angeordnet. Der von der Aufnahmeeinrichtung VKX erfaßte Bildausschnitt in der Y, Z-Betrachtungsebene ist somit in eine Vielzahl von Teilaufnahmeflächen aufgerastert. Pro lichtempfindliches Element kann somit ein Helligkeits-Intensitätswert der Projektionsabbildung der beiden Faserenden VB11*, VB21* erzeugt werden. Es werden also die Intensitätswerte der Faserabbildungen VB11*, VB21* mit der gegebenen Auflösung der Aufnahmeeinrichtung VKX pixelweise erfaßt. Diese Bildinformationen werden über eine Leitung ALX an die Speichereinrichtung VA übertragen und dort zur Auswertung mit Hilfe der Recheneinrichtung CPU bereitgestellt. Die Recheneinrichtung CPU kann aus den aufgenommenen Intensitätsbzw. Helligkeitswerten der beiden Faserabbildungen VB11*, VB21* insbesondere Steuersignale zum Abgleich der Faserenden aufeinander in der Y, Z-Ebene ableiten. Daraufhin weist dann die Recheneinrichtung CPU über die Steuerleitung VL1 das Stellglied PO an, die Positioniereinrichtung SGY solange in Y-Richtung zu verschieben, bis der etwaige laterale Versatz der Faserabbildungen VB11*, VB21* in Y-Richtung zu null gemacht wird. Somit sind dann die beiden Lichtleitfasern auch in der Y, Z-Betrachtungsebene hinsichtlich der Faserkerne und/oder Außenkonturen weitgehend fluchtend aufeinander ausrichtbar.

Auf diese Weise kann ein mehrdimensionaler Abgleich der beiden Faserenden, das heißt deren Ausrichtung aufeinander in mehreren verschiedenen Lageebenen vorgenommen werden.

Insbesondere kann ein etwaiger radialer Gesamtversatz der beiden Faserenden zueinander weitgehend dadurch eliminiert werden, daß die beiden Faserenden in mindestens zwei Betrachtungsebenen abgebildet und fluchtend aufeinander ausgerichtet werden. Diese beiden Betrachtungsebenen wie zum Beispiel die X, Z- sowie die Y, Z-Projektionsebene, stehen vorzugsweise senkrecht zueinander.

Gegebenenfalls kann es auch bereits ausreichend sein, für die beiden Fasern FE1, FE2 Halteeinrichtungen vorzusehen, die bezüglich der Faserlängsachsen in lateraler Richtung ortsfest angeordnet sind, das heißt die keine queraxialen Verschiebebewegungen, sondern lediglich Relativbewegungen der beiden Faserenden gegeneinander in Faserlängsrichtung zulassen. In der Schweißeinrichtung SE von Figur 2 können also die beiden Halteeinrichtungen SGX, SGY auch ortsfest, das heißt unbeweglich installiert sein. Bei dieser vereinfachten Ausführungsvariante des Lichtwellenleiter-Schweißgeräts SG sind die Halteeinrichtungen wie zum Beispiel SGy, SGX zweckmäßigerweise derart - besreits ab Werk-dauerhaft aufeinander ausgerichtet, daß ihre Einlegenuten NU1, NU2 für die beiden Fasern FE1, FE2 möglichst aufeinander fluchten.

Beidseitig der Längserstreckung der beiden freigelegten Lichtleitfasern FE1, FE2 weist die Schweißeinrichtung SE von Figur 2 jeweils mindestens eine Schweißelektrode EL1, EL2 auf, das heißt die beiden Schweißelektroden EL1, EL2 sind aufeinander gegenüberliegenden Längsseiten der Lichtleitfasern FE1, FE2 angeordnet. Insbesondere liegt die Schweißelektrode EL1 der Schweißelektrode EL2 um etwa 180° versetzt gegenüber. Die beiden Schweißelektroden EL1, EL2 dienen als thermische Wärmequelle und sind dabei dem Zwischenraum zwischen den beiden Halteeinrichtungen SGy, SGX derart zugeordnet, daß sich zwischen ihnen jeweils ein sogenannter Lichtbogen durch Glimmentladungen queraxial, insbesondere senkrecht zur Längserstreckung der Lichtleitfasern FE1, FE2 ausbilden kann. Der Verlauf des Bereichs, in dem sich jeweils ein Lichtbogen zwischen den beiden Elektroden EL1, EL2 ausbreitet, ist in der Figur 1 mit Hilfe einer strichpunktierten Ellipse angedeutet und mit LW bezeichnet. Die beiden Schweißelektroden EL1, EL2 sind über zugehörige Stromleitungen SL1, SL2 an eine Glimmentladungs-Erzeugungseinrichtung GES, insbesondere an die Spannungsquelle eines Impulsgenerators, zur Erzeugung von Spannungsimpulsen angeschlossen. Die Ansteuerung der Glimmentladungs-Erzeugungseinrichtung GES kann dabei mit Hilfe der Rechen- und Steuereinrichtung CPU über eine Steuerleitung VL2 erfolgen.

Die Relativlage der beiden Faserabbildungen in der jeweiligen Betrachtungsebene zueinander wird bei der Schweißeinrichtung SE von Figur 2 mit Hilfe einer Anzeige Einrichtungen, insbesondere einem Display DP1, visualisiert. Die Anzeigeeinrichtung DP1 ist dazu über eine Datenleitung VL4 mit der Speichereinrichtung VA verbunden. Das Display DP1 zeigt die Abbildungen VB11, VB21 der beiden Faserenden FE1, FE2 beispielhaft in der X, Z-Bestrachtungsebene und zwar in einem Zustand, nachdem die beiden Faserenden FE1, FE2 in X-sowie in Y-Richtung jeweils bereits weitgehend fluchtend aufeinander ausgerichtet wurden, aber noch nicht stirnseitig einander kontaktieren. Im Display DP1 von Figur 2 markierte die strichpunktiert gezeichnete Geradenlinie KL die gewünschte Soll-Stoßstelle bzw. Kontaktierungsstelle für die Stirnflächen SF11, SF21 der beiden Faserabbildungen VB11, VB21 in der X, Z-Ebene. Diese Soll-Stoßlinie KL erstreckt sich im wesentlichen in X-Richtung und bildet gleichzeitig eine gewünschte Soll-Symmetrielinie für die Gesamtanordnung der beiden Fasern unmittelbar bei deren gedachter, stirnseitiger Kontaktierung. Die Z-Richtung bildet die gewünschte Soll-Fluchtlinie der beiden Faserenden FE1, FE2 in Z-Richtung.

Als Soll-Endfläche des jeweiligen Faserendes ist vorzugsweise eine weitgehend plane Faserstirnfläche gewählt, auf der die Zentralachse ZA1 bzw. ZA2 des jeweiligen Faserendes FE1 bzw. FE2 im wesentlichen senkrecht steht. Im Display DP1 von Figur 2 ist das Abbild einer solchen idalisierten Faserstirnfläche sowohl für das erste Faseren de FE1 als auch für das zweite Faserende FE2 jeweils strichpunktiert in der X, Z-Betrachtungsebene mit eingezeichnet

sowie mit dem Bezugzeichen IF1, IF2 versehen. Ideale Faserenden weisen also in der jeweiligen Betrachtungsebene, hier beispielsweise in der X, Z-Projektionsebene, vorzugsweise jeweils eine Porjektionsabbildung mit möglichst rechtecksförmiger Außenkontur auf. Räumlich bestrachtet heißt das, daß für das jeweilige Faserende idealerweise eine möglichst kreiszylinderförmgie Geometrieform mit planer Stirnfläche gewünscht ist, zu der die Faserzentralachse eine Flächennormale bildet und durch deren Mittelpunkt die Faserzentralachse hindurchverläuft. Bei solchen idealen Faserenden kämen deren Stirnflächen bezüglich der Kontaktierungslinie KL achssymmetrisch sowie dort weitgehend vollflächig im Kontakt, das heißt in der jeweiligen Betrachtungsebene würden sich die sichtbar abgebildeten Kanten idealer Stirnseiten IF1, IF2 auf der Soll-Kontaktierungslinie KL im wesentlichen entlang ihrer gesamten Projektionsbreite berühren.

In der Praxis weisen Faserenden jedoch Stirnflächen mit mehr oder weniger großen Abweichungen gegenüber dieser gewünschten Soll-Endflächenform IF1, IF2 auf. In der Figur 2 weist das Abbild VB11 des ersten Faserendes FE1 in der X, Z-Betrachtungsebene eine plane Stirnfläche SF11 auf, die gegenüber der gewünschten 90°-Endfläche EF1 um einen Fehlerwinkel WI11 schiefgestellt ist. Die Faserzentralachse ZA1 bildet somit nicht mehr eine Flächennormale zur schiefgestellten Stirnfläche SF11. Bezogen auf die gewünschte Soll-Stoßlinie KL ragt die obere Längsseite der ersten Faserabbildung VB11 über deren untere Längsseite hinaus. Während sich die Oberkante der Faserbildung VB11 bis zur Stoßlinie KL erstreckt, endet die untere Faserlängskante bereits im axialen Längsabstand von der Stoßlinie KL entfernt. Die Oberkante der Faserabbildung VB11 ist im Display DP1 mit KAO, die Unterkante mit KAU bezeichnet. Die Oberkante KAO ist mit der Unterkante KAU über die schräg verlaufende Geradenlinie SF11 verbunden. Dies ist in der X, Z-Betrachtungsebene die schräg verlaufende, plane Stirnfläche SF11. Dadurch, daß die Oberkante KAO in Richtung auf die Stoßlinie KL weiter als die Unterkante KAU hinausragt, ist ein dreiecksförmiger Überhang an der Stirnseite des ersten Faserendes FE1 gebildet. Gegenüber der idealen Faserabbildung IF1 mit Rechtecksform, bei der die Stirnfläche im wesentlichen parallel zur Kontaktierungslinie KL in X-Richtung verläuft, ist die Stirnfläche SF11 somit um den Fehlerwinkel WI11 geneigt. Die plane Faserstirnfläche SF11 steht also gegenüber der gewünschten 90°-Endfläche IF1 um den Fehlerwinkel WI11 schief. Je größer der axiale Längsabstand zwischen der oberen und der unteren Abbruchkante KAO, KAU auf gegenüberliegenden Längsseiten der Faserabbildung VB11 wird, desto größer wird der resultierende Endflächen-Fehlerwinkel WI11. In der X, Z-Bildebene verläuft die sichtbare Kante der Stirnfläche SF11 (bei Blickrichtung von links nach rechts) von links unten als schräge Geradenlinie nach rechts oben. Diesem ersten Faserabbild VB11 fehlt also gegenüber der ideal rechteckförmigen Projektionsabbildung IF1 stirnseitig ein dreiecksförmiger Flächenbereich.

Auch das Abbild VB21 des zweiten Faserendes FE2 weist eine etwa plane Stirnfläche SF21 auf, die gegenüber der gewünschten 90°-Endfläche IF2 um einen bestimmten Fehlerwinkel WI21 schiefgestellt ist. Die sichtbare Kante der schiefgestellten Stirnfläche SF21 verläuft dabei im Display DP1 (bei Blickrichtung von rechts nach links) von rechts unten entlang einer schrägen Geradenlinie nach links oben. Dem zweiten Faserende FE2 fehlt also ebenfalls stirnseitig ein dreiecksförmiger Flächenbereich gegenüber der ideal rechteckförmigen Abbildung IF2.

Die sichtbaren Kanten der Stirnflächen SF11, SF21 laufen somit aufeinander zu. Ihre gedachten Verlängerungen, die im Display DP1 strichpunktiert eingezeichnet sind, schneiden sich somit. Sie schließen zwischen sich einen Gesamtfehlerwinkel WIG ein, der sich aus der Summe der einzelnen Fehlerwinkel der Faserstirnflächen zusammensetzt, so daß gilt WIG = WI11 + WI21. Im Display DP1 ist die erste Faserabbildung VB11 gerade so weit in Z-Richtung verschoben, daß ihre Stirnfläche SF11 erstmals mit der strichpunktiert eingezeichneten Soll-Kontaktierungslinie KL in Berührung kommt. Da ihre obere, stirnseitige Ecke bzw. Abbruchkante am weitesten in Z-Richtung gegenüber ihrer sonstigen Außenkontur vorspringt, kommt sie nur dort mit der Kontaktierungslinie KL erstmalig in Kontakt. Dieser oberen Ecke der ersten Faserabbildung VB11 steht im axialen Längsabstand LA die obere stirnseitige Ecke bzw. Abbruchkante der zweiten Faserabbildung VB21 gegenüber. Diese obere Ecke der zweiten Faserstirnfläche SF21 steht gegenüber deren sonstiger Außenkontur in Z-Richtung betrachtet ebenfalls am weitesten in den Zwischenraum zwischen den beiden sich gegenüberstehenden Faserenden vor. Da die Faserstirnflächen SF11, SF21 in der X, Z-Betrachtungsebene nicht parallel zur Kontaktierungslinie KL in X-Richtung verlaufen, sondern aufeinander zu, ergibt sich zwischen den beiden Faserenden ein Zwischenraum SP1, der sich auf dieselbe Längsseite der Faseranordnung zu hin aufweitet. Im vorliegenden Beispiel weitet sich der Zwischenraum SP1 von den in Z-Richtung fluchtenden Oberkanten der beiden Faserabbildungen VB11, VB21 zu deren in Z-Richtung fluchtenden Unterkanten hin auf. Die fehlenden Materialdreiecke an den Stirnseiten der Faserabbildungen VB11, VB21 vergrößern sich also auf dieselbe Längsseite der Faseranordnung zu. Da sich die beiden Faserabbildungen VB11, VB21 entlang ihren oberen Längsseiten betrachtet mit einem axialen Längsabstand LA gegenüberstehen, d.h. da ihre beiden am weitesten aufeinander zuspringenden Faserstirnecken im axialen Längsabstand LA voneinander liegen, ergibt sich insgesamt betrachtet ein trapezförmiger Spalt-Zwischenraum zwischen den beiden Faserabbildungen VB11, VB21.

In der X, Z-Betrachtungsebene wird also sowohl das erste Faserende als auch das zweite Faserende jeweils als ein sich geradlinig erstreckender Streifen projiziert, der endseitig schräg angeschnitten ist. Die jeweilige Faserabbildung VB11, VB21 weist dabei endseitig eine trapezförmige Außenkontur auf. Mit anderen Worten heißt das, daß die Längsseiten der jeweiligen streifenförmigen Faserabbildung VB11 bzw. VB21 durch Geradenlinien gebildet sind, die im wesentlichen parallel zur Faser- Zentralachse ZA1 bzw. ZA2 verlaufen sowie in radialem Abstand von dieser angeordnet sind. Im Display DP1 liegen die beiden Längsseiten der Faserabbildungen VB11, VB21 bezüglich der Zentralachse ZA1 bzw.ZA2 vorzugsweise achssymmetrisch zueinander.

Um nun Informationen über den tatsächlichen Verlauf der jeweiligen Faserstirnfläche und/oder über den Spaltraum zwischen den beiden, sich in vorgebbaren Längsabstand LA gegenüberstehenden Faserenden gewinnen zu können, wird die jeweilige Faser bezüglich mindestens zweier Meßfenster derart in Position gebracht, daß in der jeweiligen Betrachtungsebene der Rand ihrer abgebildeten Stirnfläche von jedem Meßfenster an unterschiedlichen Randstellen mindestens einmal erfaßt oder überschritten wird.

Beispielsweise im Display DP1 von Figur 2 sind dazu zwei Meßfenster MF11, MF21 innerhalb eines Streifens der X, Z-Betrachtungsebene festgelegt, der von den gedachten Verlängerungen der Längsseiten der Faserabbildungen VB11, VB21 begrenzt wird. Das erste Meßfenster MF11 ist der oberen, in Faserlängsrichtung verlaufenden Randbegrenzung dieses Streifens sowie das zweite Meßfenster MF21 der gegenüberliegenden, d.h. unteren, in Faserlängsrichtung verlaufenden Randzone dieses Streifens zugeordnet. Die beiden Meßfenster MF11, MF21 sind somit bezogen auf die Längsachsen ZA1, ZA2 der beiden Fasern FE1, FE2 lateral um einen vorgebbaren Querabstand DX gegeneinander versetzt angeordnet. Der queraxiale Abstand DX der beiden Meßfenster MF11, MF21 gegeneinander ist vorzugsweise zwischen dem 0,2 und 0,9 fachen der queraxialen Breite der jeweiligen Faserabbildung VB11 bzw. VB21, d.h. des abgebildeten Faseraußendurchmessers gewählt. Die Erstreckung des jeweiligen Meßfensters MF11 bzw. MF21 ist in Faserlängsrichtung größer als quer zur Längsachse ZA1 bzw. ZA2 der Fasern FE1 bzw. FE2 gewählt. Für die beiden Meßfenster MF11, MF21 ist etwa dieselbe Flächenform gewählt. Das erste sowie zweite Meßfenster MF11, MF21 ist jeweils als ein schmal rechteckförmiger Streifen ausgebildet. Beide Meßfenster MF11, MF21 erstrecken sich im wesentlichen parallel zueinander. Sie sind etwa denselben Längsorten entlang den Faserlängserstreckungen,das heißt hier in Z-Richtung zugesordnet. Jedes Meßfenster MF11, MF21 verläuft mit seinen Längsseiten im wesentlichen parallel zu den in Faserlängsrichtung verlaufenden Außenkonturen, das heißt Längsseiten der beiden Faserabbildungen VB11, VB21.

Es sind also mindestens zwei Meßfenster in verschiedenen lateralen Höhen quer, insbesondere senkrecht zur Faserlängserstreckung, das heißt hier in X-Richtung innerhalb eines Streifens der jeweiligen Betrachtungsebene, hier der X, Z-Betrachtungsebene festgelegt, der von den gedachten Verlängerungen der beiden Längsseiten der jeweiligen Faserabbildung begrenzt wird. Innerhalb dieses Streifens liegen die beiden Meßfenster MF11, MF21 vorzugsweise möglichst weit in X-Richtung betrachtet auseinander.

Das jeweilige Meßfenster MF11 bzw. MF21 erstreckt sich in Faserlängsrichtung, das heißt hier in Z-Richtung, vorzugsweie zumindest soweit, daß es an seiner queraxialen Position X11 bzw. X21 den dortigen Spalt zwischen den beiden Faserabbildungen VB11, VB21 in Z-Richtung überbrückt und dabei noch die Stirnflächenränder SF11, SF21 der beiden Faserabbildungen gleichzeitig mit erfaßt. Im einzelnen überbrückt das erste Meßfenster MF11 in Z- Richtung entlang der Zeile X11 betrachtet die dortige lichte Weite SB11 des Spaltraums SP1 zwischen den beiden Stirnflächen SF11, SF21 (vgl. Figur 1) und erfaßt dabei gleichzeitig zumindest die beiden Stirnflächenränder. Das zweite Meßfenster MF21 überbrückt an seinem queraxialen Lageort X21 zumindest die dortige Weite SB21 des Spaltes SP1 zwischen den beiden Stirnflächen SF11, SF21 der Faserabbildungen VB11, VB21 und erfaßt dabei gleichzeitig zumindest die beiden Stirnflächenränder. (vgl. Figur 1)

Beide Meßfenster MF11, MF21 verlaufen im wesentlichen parallel zueinander. Sie sind etwa denselben Längsorten entlang den Faserlängserstreckungen in Z-Richtung zugeordnet. Beide Meßfenster MF11, MF21 beginnen also am selben Z-Längsort Z11 und enden am selben Z-Längsort Z21. Sie erstrecken sich somit beide über dieselbe Länge in Z-Richtung, nämlich von Z11 bis Z21. Senkrecht zur jeweiligen Faserlängserstreckung, d.h. in X-Richtung betrachtet sind die beiden Meßfenster MF11, MF21 unterschiedlichen X-Positionen zugeordnet, das heißt sie sind bezogen auf die Faserzentralachsen ZA1, ZA2 lateral, insbesondere in radialer Richtung gegeneinander versetzt.

Da die jeweilige Lichtleitfaser FE1 bzw. FE2 wie eine Zylinderlinse für das sie hindurchdringende Licht wirkt, erscheint ihre Faserabbildung in der Praxis in Faserquerrichtung betrachtet nicht homogen hell. Die Intensitätsverteilung bei Abtastung quer zur Faserlängserstreckung wird nachfolgend beispielhaft anhand der Intensitätskurve IV2 für die zweite Lichtleitfaser FE2 im einzelnen erläutert. Das Helligkeitsprofil IV2 der zweiten Faserabbildung VB21 in X-Richtung ist dabei der besseren Veranschaulichung halber in der rechten Bildhälfte von Figur 2 neben dem Display DP1 zusätzlich mit eingezeichnet. Außerhalb des Schattenbereichs VB21, das heißt außerhalb dem Durchmesserbereich des Faserendes FE2, ist die Intensität IV2 hoch, weil sich hier das Licht der Lichtquelle LQ1 völlig ungehindert ausbreiten kann. Sobald der äußere Rand des Schattenbildes VB21 erreicht wird, sinkt die Intensitätsverteilung sehr stark ab, und zwar relativ schlagartig. Über den gesamten, durch die Abschattung erfaßten Durchmesserbereich D bleibt aber die Intensität IV2 nicht konstant, sondern sie erreicht vorzugsweise in der Mitte dieses Schattenbereichs ein Maximum. Denn die Zylinderform der Lichtleitfaser verursacht hier im Zentrum der Projektionsabbildung VB21 eine helle Brennlinie IM2. Gegen den anderen Rand der Schattenfläche VB21 hin tritt symmetrisch zur Brennlinie IM2 wieder ein Abfall der Intensität IV2 auf und nach dem Verlassen des Schattenbereichs bzw. Schattenbilds VB21 steigt die Intensität IV2 wieder abrupt auf den ursprünglichen Helligkeitswert an. Die beiden Meßfenster MF11, MF21 werden zweckmäßigerweise im Bereich der Längsränder der Faserabbildungen VB11, VB21 positioniert, das heißt dort, wo die Faserabbildungen jeweils einen dunklen Randstreifen aufweisen. Dadurch kann in vorteilhafter Weise sichergestellt werden, daß die beiden Meßfenster MF11, MF21 in Querrichtung der Faserabbildungen VB11, VB21 betrachtet an Orten mit etwa gleicher Helligkeit liegen. Das Meßfenster MF11 ist dabei der oberen, dunklen Randzone wie z.B. DF11 sowie das zweite Meßfenster MF21 der unteren, dunklen Randzone wie z.B. DF21 des Intensitätsprofils der Faserabbildungen wie z.B. IV2 zugeordnet. Dadurch wird eine Art Abgleich der beiden Meßfenster hinsichtlich der aufgenommenen Intensitätswerte erreicht, wenn beide Meßfenster MF11, MF21 vollständig innerhalb der Schattenfläche der Faserabbildungen liegen würden. Den beiden Meßfenstern MF11, MF21 wird also in erster Näherung in etwa dieselbe Grundhelligkeit im Intensitätsprofil der Faserabbildungen zugewiesen. Im einzelnen ist das erste Meßfenster MF11 am X-Ort X11 sowie das zweite Meßfenster im Querabstand DX davon am X-Ort X21 positioniert. Es gilt also X11 - X21 = DX.

Figur 1 zeigt in schematischer sowie vergrößerter Darstellung die beiden Faserabbildungen VB11, VB21 des Projektionsbildes im Display DP1 von Figur 2. Jedes Meßfenster MF11 bzw. MF21 ist hier in Figur 1 jeweils durch eine einzelne Meßzeile in Faserlängsrichtung gebildet. Im einzelnen weist das erste Meßfenster MF11 eine Vielzahl von Meßzellen P11 mit P1n auf, die in Faserlängsrichtung, das heißt hier in Z-Richtung entlang einer gedachten Verbindungsgeraden angeordnet sind. Als Meßzellen P11 mit P1n sind vorzugsweise lichtempfindliche Elemente vorgesehen, insbesondere Fotoelemente. Jede Meßzelle P11 mit P1n weist vorzugsweise eine rechteckförmige Detektorfläche auf, die das auf ihr fallende Licht in Abhängigkeit von dessen jeweiliger Intensität in ein entsprechendes elektrisches Meßsignal umwandelt. Die einzelnen Meßzellen P11 mit P1n dieser ersten Meßzeile sind dabei vorzugsweise lückenlos nebeneinander angeordnet. Jede Meßzelle bildet somit ein Pixelement, das mit seiner Zellenfläche einen Teilausschnitt des jeweiligen Projektionsbildes in der X, Z-Betrachtungsebene erfaßt und dafür einen repräsentativen Intensitätsmeßwert liefert. Auf diese Weise ist es ermöglicht, die X, Z-Betrachtungsebene entlang der Meßzeile des ersten Meßfensters MF11 pixelweise abzutasten und dabei pro Pixelement jeweils einen Intensitätsmeßwert für dasjenige Projektionslicht aufzunehmen, das auf dessen Detektionsfläche fällt. In der Figur 1 weist die erste Meßzeile MF11 eine so große Erstreckung in Faserlängsrichtung auf, daß sie an ihrer X-Position X11 die dortige Spaltweite SB11 zwischen den beiden abgebildeten Faserstirnflächen SF11, SF21 überquert sowie teilweise in das Schattenbild VB11 als auch in das Schattenbild VB21 hineinragt. Die Meßzeile MF11 überschreitet dabei sowohl den Rand der abgebildeten Stirnfläche SF11 der ersten Faser FE1 als auch den projizierten Stirnflächenrand SF21 der zweiten Faser FE2. Das erste Meßfenster MF11 ermöglicht es somit, an seinem X-Ort X11 entlang einer geradlinigen Meßzeile vorgebbarer Länge in Faserlängsrichtung Intensitätsmeßwerte im Übergangsbereich zwischen dem ersten Schattenbild VB11 zum Spalttraum SP1 zwischen den beiden Faserabbildungen VB11, VB21, über diesen Spalttraum SP1 selbst sowie über die Übergangszone zwischen dem Spalttraum SP1 und dem zweiten Faserschattenbild VB21 pixelweise zu gewinnen. In der Figur 1 werden die einzelnen Pixelemente P11 mit P1n der ersten Meßzeile über eine Steuerleitung VL8 von der zentralen Rechen- und Steuereinrichtung CBU aus aktiviert und/oder deaktiviert. Mit Hilfe der zentralen Rechen- und Steuereinrichtung CPU kann das erste Meßfenster MF11 über die Steuerleitung VL8 angewiesen werden, die Intensitätsmeßwerte ihrer Pixelemente P11 mit P1n auszulesen und über eine Datenleitung AL11 an die Speichereinrichtung VA von Figur 2 zu übergeben. In der Figur 1 ist die Speichereinrichtung VA der zeichnerischen Einfachheit halber lediglich strichpunktiert angedeutet.

Über eine Datenleitung AL11* können die aufgenommenen Intensitätsmeßwerte von der Speichereinrichtung VA an eine Anzeigeeinrichtung AZ11, insbesondere einem Display übertragen und dort visualisiert werden. Die Anzeigeeinrichtung AZ11 zeigt in schematischer Darstellung ein Diagramm, entlang dessen Abszisse PN1 die Nummern PN11 mit PN1n der Pixelelemente P11 mit P1n in äquidistanten Abständen aufgetragen sind. Den Pixelnummern PN11 mit PN1n sind die Intensitätsmeßwerte der Pixelelemente P11 mit P1n entlang der Ordinaten IT11 des Diagramms zugeordnet. Während die Pixelelemente P11 mit P15 ganz im Faserschattenbild VB11 liegen, erfaßt das Pixelelement P16 den Rand der Faserstirnfläche SF11, das heißt teils die Faserabbildung VB11, teils den Spalttraum SP1. Dem Pixelelement P16 ist deshalb ein größerer Intensitätswert als den Pixelelementen P11 mit P15 zugeordnet. Weiter von links nach rechts in Z-Richtung betrachtet liegen dann die Pixelelemente P17 mit P111 jeweils ganz im hellen Spalttraum SP1. Ihre zugehörigen Intensitätsmeßwerte sind deshalb größer als der Intensitätsmeßwert für das Pixelelement P16. Auf die Detektionsfläche des Pixelelements P112 fällt der Stirnflächenrand der zweiten Faserabbildung VB21, so daß es dort wieder zu einem Abfall der Lichtintensität kommt, da das Pixelelement P112 teils den Spalttraum SP1, teils das Faserschattenbild VB21 erfaßt. Die nachfolgenden Pixelelemente P113 mit P1n liegen schließlich vollständig im Schattenbild VB21 der zweiten Faser FE2. Ihnen sind somit Intensitätsmeßwerte zugeordnet, die kleiner als die Intensitätsmeßwerte der Pixelelemente P16 mit P111 sowie P112 sind. In Z-Richtung betrachtet kommt es somit zu einem Intensitätswechsel von dunkel nach hell beim Übergang der ersten Faserabbildung VB11 zum Spalttraum SP1 und dann anschließend wieder zu einem Helligkeitspixel von hell nach dunkel in der Übergangszone vom Spalttraum SP1 zum zweiten Schattenbild VB21. Dasjenige Pixelelement, von dem der Wechsel von dunkel nach hell auftritt, kennzeichnet somit den Stirnflächenrand der ersten Faserabbildung VB11. Der in Z-Richtung folgende Wechsel von hell nach dunkel läßt sich demjenigen Pixelelement P112 zuordnen, auf dessen Fläche der Stirnflächenrand SF21 des zweiten Faserschattenbildes VB21 abgebildet wird. Die Anzahl der Pixelelemente P16 mit P112, also diejenigen Pixelelemente, die höhere Intensitätsmeßwerte als die übrigen Pixelelemente aufweisen geben dann eine Meßgröße für die Breite SB11 des Spaltes SP1 am X11-Ort des Meßfensters MF11 an. Bei Kenntnis der Pixelgröße in Z-Richtung kann sogar die Spaltbreite SB11 in der X, Z-Betrachtungsebene explizit angegeben werden, indem die Anzahl der Pixelelemente mit größeren Intensitätswerten mit der Pixelbreite eines Pixelelements multipliziert wird. Insbesondere kann denjenigen Pixelelementen wie zum Beispiel P16, P112, auf die der Stirnflächenrand SF11 bzw. SF21 der jeweiligen Faserabbildung trifft, in eindeutiger Weise ein entsprechender Z-Lageort zugeordnet werden.

Da sich der Spaltraum SP1 von der oberen zur unteren Randbegrenzung der Faserabbildungen VB11, VB21 stetig aufweitet, das heißt dabei seine axiale Spaltbreite in Z-Richtung fortlaufend wächst, kreuzen die beiden Stirnflächenränder SF11, SF21 die zweite Meßzeile MF21 an Z-Orten, die gegenüber den Kreuzungsorten bei der ersten Meßzeile MF11 weiter nach außen auf die Enden der Meßzeile MF21 zu vesetzt sind. In der Figur 1 wird der Rand der Stirnfläche SF11 bereits auf das dritte Pixelelement P23 projiziert, während der Rand der abgebildeten Stirnfläche SF21 die Detektionsfläche des drittletzten Pixelelements P215 schneidet. Die zweite Meßzeile MF21 erstreckt sich also in Z-Richtung ebenfalls über eine solche Länge, daß sie über die dortige Spaltbreite reicht und sowohl den Rand der abgebildeten Faserstirnfläche SF11 als auch den abgebildeten Stirnflächenrand SF21 überschreitet. Die Vielzahl von Pixelelementen P21 mit P2n der zweiten Meßzeile MF21 liefern dann in axialer Richtung betrachtet eine örtliche Intensitäserteilung, die Intensitätswerte des Übergangsbereich zwischen der ersten Faserabbildung VB11 und dem Spalt SP1, des Spaltes SP1 selber sowie des Übergangsbreiches zwischen dem Spalt SP1 und der zweiten Faserabbildung VB21 mit umfaßt. Aufgrund der vergrößerten Spaltbreite SB21 an der X-Stelle X21 der zweiten Meßzeile MF21 liegen jetzt gegenüber dem Intensitätsprofil der ersten Meßzeile MF11 mehr Pixelelemente im hellen Spaltraum SP1. Lediglich den ersten beiden Pixelelementen P21, P22 sowie den letzten beiden Pixelelementen P2n-1, P2n, die in die Schattenbilder VB11, VB21 fallen, sind geringere Intensitätswerte gegenüber den übrigen Pixelelementen P23 mit P215 zugeordnet. Beim Pixelelement P23, das vom Stirnflächenrand SF11 gequert wird, findet in Z-Richtung von links nach rechts betrachtet ein Wechsel von dunkel nach hell statt. Umgekehrt dazu tritt ein Wechsel in der Helligkeit von hell nach dunkel beim Pixelelement P215 ein, das an der Grenze zwischen dem hellen Spaltraum SP1 und dem dunklen Schattenbild VB21 liegt. Die zweite Meßzeile MF21 kann analog zur ersten Meßzeile ebenfalls über eine Steuerleitung VL9 von der zentralen Rechen- und Steuereinrichtung CPU aus angesteuert werden. Die einzelnen Intensitätsmeßwerte in ihrer Vielzahl von Pixelelementen P21 mit P2n können über eine Datenleitung AL21 separat ausgelesen werden und der Speichereinrichtung VA von Figur 2 zugeführt werden. Der zeichnerischen Einfachheit halber ist die Speichereinrichtung VA in der Figur 1 in der Datenleitung AL21 lediglich strichpunktiert angedeutet. Über eine Leitung AL21* können die einzelnen Intensitätswerte pixelweise an eine zweite Anzeigeeinrichtung AZ21 übertragen werden, die die örtliche Intensitätsverteilung der Pixelelemente P21 mit P2n schematisch darstellt. Entlang der Abszisse der zweiten Anzeigeeinrichtung AZ21 sind die Nummern PN21 mit PN2n der Pixelelemente P21 mit P2n aufgetragen. Entlang der Ordinaten IT21 sind den Pixelnummern PN21 mit PN2n die zugehörigen Intensitätsmeßwerte der Pixelelemente P21 mit P2n zugeordnet. Die Pixelelemente der zweiten Meßzeile MF21, die annäherungsweise in der Spaltmitte liegen, weisen die größten Intensitätsmeßwerte auf. Diejenigen Pixelelemente, bei denen es jeweils zu einem abrupten Anstieg oder Abfall der Intensitätsverteilung kommt, kennzeichnen die Lage des jeweiligen Faserstirnflächenrandes SF11 bzw. SF21. Die Anzahl der Pixelelemente PN23 mit PN215 im Spaltraum SP1, die gegenüber den übrigen Pixelelementen der zweiten Meßzeile MF21 größere Intensitätsmeßwerte aufweisen, bildet dann ein Maß für die Breite SB21 in Z-Richtung an der X21-Stelle des Spaltes SP1. Insbesondere kann die Spaltbreite SB21 explizit dadurch berechnet werden, daß die Summe der im Spaltraum SP1 hell erscheinenden Pixelelemente mit der axialen Erstreckung eines Pixelelements in Z-Richtung multipliziert wird.

Auf diese Weise ist es mit Hilfe mindestens zweier Meßfenster, die quer zur Faserlängserstreckung lateral zueinander versetzt sind, ermöglicht, eine Vielzahl von Meßinformationen über den Spaltraum zweier sich gegeneinander überstehender Faserenden zu gewinnen. Insbesondere kann aus den örtlichen Intensitätsverteilungen der beiden Meßfenster gegebenenfalls auch der Fehlerwinkel WI11 bzw. WI21 der jeweiligen Faserstirnfläche SF11 bzw. SF21 ermittelt werden. Um beispielsweise den Fehlerwinkel WI11 der Stirnfläche SF11 zu erhalten, wird die Differenzanzahl von Pixelelementen ermittelt, die zwischen dem Detektionsort des Stirnflächenrandes SF11 bei der ersten Meßzeile MF11 und dem Detektionsort des Stirnflächenrandes SF11 bei der zweiten Meßzeile MF21 liegt. Während der Stirnflächenrand bei der ersten Meßzeile MF11 auf das sechste Pixelelement P16 trifft, wird er bei der zweiten Meßzeile MF21 bereits auf das dritte Pixelelement P23 projiziert. Von der ersten zur zweiten Meßzeile betrachtet ist also der Stirnflächenrand um etwa drei Pixelwerte in Z- Richtung versetzt. Damit läßt sich ermitteln, um welche Strecke DZ11 der Stirnflächenrand SF11 an der X-Position X21 gegenüber der X-Position X11 in axialer Richtung versetzt ist. Der Fehlerwinkel WI11 läßt sich dann nach der Beziehung WI11 = arctan (DZ11/DX) bestimmen, wobei DX der laterale Abstand der beiden Meßzeilen MF11, MF21 in X-Richtung betrachtet ist, und DZ11 den axialen Versatz bezeichnet, den der Stirnflächenrand SF11 zwischen den beiden Meßzeilen MF11, MF21 aufweist.

Die Anzahl der Pixelelemente, um die der Schnittort des Stirnflächenrandes SF11 bei der zweiten Meßzeile MF21 gegenüber dem Schnittort bei der ersten Meßzeile MF11 in axialer Richtung versetzt ist, läßt sich ggf. in besonders einfacher Weise dadurch ermitteln, daß die Intensitätsverteilung der ersten Meßzeile MF11 mit der Intensitätsverteilung der zweiten Meßzeile MF21 korreliert wird. Vorzugsweise werden die örtlichen Intensitätsverteilungen der beiden Meßzeilen miteinander kreuzkorreliert. Dort wo diese Kreuzkorrelationsfunktion jeweils ein Maximum aufweist, ist der Ot größter Verwandschaft zwischen den beiden Intensitätsverteilungen erreicht. Der diesem Maximum zugeordnete Verschiebeweg bildet dann ein Maß für den axialen Versatz des jeweiligen Stirnflächenrandes bei seinem Verlauf von der ersten zur zweiten Meßzeile.

Besonders einfach läßt sich der axiale Versatz des Stirnflächenrandes ggf. dadurch ermitteln, daß die Anzahl der Pixelelemente aus den örtlichen Intensitätsverteilungen IT11, IT21 ermittelt wird, die zwischen den Pixelnummern PN16, PN23 liegen, also zwischen denjenigen Pixelnummern der beiden Intensitätsverteilungen IT11, IT21, bei denen sich jeweils ein signifikanter Helligkeitsanstieg zeigt.

Analog dazu kann auch der Fehlerwinkel der Stirnfläche SF21 der zweiten Faserabbildung VB21 dadurch ermittelt werden, daß die Nummern derjenigen Pixelelemente aus den Intensitätsverteilungen IT11, IT21 bestimmt werden, bei denen sich jeweils ein abrupter Abfall der Intensitätswerte von hell nach dunkel zeigt. Der Differenzwert zwischen den Pixelnummern, bei denen sich ein Helligkeitsübergang von hell nach dunkel ergibt, ist dann ein Maß für den axialen Versatz des Stirnflächenrandes SF21 auf seinem Weg von der ersten Meßzeile MF11 zur zweiten Meßzeile MF21. Der Endflächenwinkel WI21 ermittelt sich vorzugsweise in erster Näherung nach der Beziehung WI21 = arctan DZ21/DX , wobei DZ21 der axiale Abstand des Stirnflächenrandes SF21 in Z-Richtung zwischen den beiden Meßzeilen MF11, MF21 ist, sowie DX den lateralen Querabstand der beiden Meßzeilen in X-Richtung zueinander bezeichnet.

Da es lediglich auf den relativen Lageversatz des Faserrandes in Z-Richtung ankommt, ist es nicht erforderlich, den tatsächlichen Z-Längsort des Faserstirnflächenrandes zu ermitteln. Es genügt, den Positionsunterschied des Stirnflächenrandes in Z-Richtung bei den beiden Meßfenstern MF11, MF21 zu ermitteln. Insbesondere kann es bereits ausreichend sein, als Maß für den lateralen Abstand DX und der beiden Meßfenster MF11, MF21 die Anzahl der Pixel zwischen den X-Positionen der beiden Meßfenster MF11, MF21 zu zählen. Zur Kennzeichnung des lateralen Versatzes der Faserstirnfläche genügt es dann, die Differenzsumme derjenigen Pixelwerte zu ermitteln, die zwischen denjenigen Pixelelementen der ersten und zweiten Meßzeile liegen, die vom jeweiligen Stirnflächenrand geschnitten werden.

Allgemein betrachtet werden also bei dieser ersten Variante des erfindungsgemäßen Meßprinzips die jeweilige Faser sowie mindestens zwei Meßfenster derart relativ zueinander positioniert, daß der abgebildete Stirnflächenrand der Faser von mindestens zwei Meßfenstern an unterschiedlichen Randstellen gleichzeitig erfaßt wird. Die beiden Meßfenster liegen dabei innerhalb eines Streifens der jeweiligen Betrachtungsebene, die von den gedachten Verlängerungen der Längsseiten der jeweiligen Faserabbildung begrenzt ist. Die mindestens zwei Meßfenster sind bezogen auf die Längsachse dieser Faser lateral um einen vorgebbaren Querabstand gegeneinander versetzt festgelegt. Auf diese Weise wird der Rand der abgebildeten Stirnfläche der jeweiligen Faser von jedem der mindestens zwei Meßfenster an unterschiedlichen Randstellen mindestens einmal erfaßt oder überschritten. Die örtlichen Intensitätsverteilungen dieser Meßfenster werden aufgenommen und zur Auswertung bereitgestellt. Durch Vergleich ihrer Intensitätsmeßwerte können dann Informationen über die jeweilige Faserstirnfläche abgeleitet werden. Insbesondere ist es ermöglicht, Informationen über den Spaltraum zwischen zwei einander gegenüberstehenden Faserenden zu erhalten. In besonders vorteilhafter Weise ist es ermöglicht, für das jeweilige Faserende einen etwaigen Fehlerwinkel seiner Stirnfläche zu ermitteln. Darüber hinaus läßt sich die Spaltbreite zwischen zwei einander gegenüberstehenden Faserenden in Faserlängsrichtung an unterschiedlichen, d.h. an mindestens zwei bzw. an mehreren Querorten angeben. Weiterhin sind Aussagen über den tatsächlichen Verlauf der jeweiligen Faserstirnfläche möglich. Dazu ist es besonderes zweckmäßig, mehr als zwei Meßfenster lateral zueinander versetzt in Querrichtung der Faserabbildungen vorzusehen. Gegebenenfalls sind auch Aussagen über die Querschnittsgeometrieform des Spaltraums zwischen zwei einander gegenüberstehenden Faserenden möglich.

Das jeweilige Meßfenster läßt sich insbesondere dadurch in der jeweiligen Betrachtunsebene festlegen, daß im Bildausschnitt der jeweiligen Aufnahmeeinrichtung wie zum Beispiel VKY von Figur 2 mit Hilfe der Rechen- und Steuereinrichtung CPU eine entsprechende Anzahl von Pixelelementen ausgewählt wird, deren Intensitätsmeßwerte zur Auswertung ausgelesen und festgehalten werden. Bei Verwendung zum Beispiel einer Videokamera kann es insbesondere zweckmäßig sein, aus der Vielzahl der lichtempfindlichen Elemente ihres Bildsensors eine Teilmenge als Meßfenster auszuwählen. Vorzugsweise kann das jeweilige Meßfenster durch eine Anzahl von Pixelelementen festgelegt werden, die entlang einer Abtastzeile des Bildsensor in Faserlängsrichtung liegen. Anfang und Ende des Meßfensters werden dabei zweckmäßigerweise derart gewählt, daß der Stirnflächenrand der jeweiligen Faserabbildung in Faserlängsrichtung betrachtet überquert wird. Bei zwei gegenüberliegenden Fasern wird erfaßt das jeweilige Meßfenster vorzugsweise deren beide Stirnflächenränder gleichzeitig.

Aus den örtlichen Intensitätsverteilungen der beiden Meßzeilen MF11, MF21 von Figur 1 läßt sich in besonders vorteilhafter Weise auch der Gesamtwinkelfehler WIG zwischen den beiden aufeinander zulaufenden Stirnflächen SF11, SF21 ermitteln. Die beiden Meßzeilen MF11, MF21 sowie die Stirnflächenränder SF11, SF21 rahmen einen trapezförmigen Ausschnitt des Spaltraums SP1 ein. Die Eckpunkte dieser trapezförmigen Fläche sind in der Figur 1 durch die Pixelelemente P16, P112 der ersten Meßzeile MF11 sowie durch die Pixelelemente P23, P215 der zweiten Meßzeile MF21 gebildet. Unter der Annahme etwa gleich großer Fehlerwinkel für die Stirnflächen SF11, SF21 läßt sich dann der Gesamtwinkelfehler WIG in erster Näherung nach folgender Beziehung ermitteln:

$$WIG = arctan ((SB21-SB11)/DX)$$

Die Einzelfehlerwinkel WI11, WI21 und/oder der Gesamtwinkel WIG können in der Schweißeinrichtung SE von Figur 2 mit Hilfe einer eigens vorgesehenen Anzeigeeinrichtung DP2, insbesondere einem Display, explizit angezeigt werden. Die Anzeigeeinrichtung DP2 ist dazu über eine Leitung VL5 mit der zentralen Rechen- und Steuereinrichtung CPU verbunden.

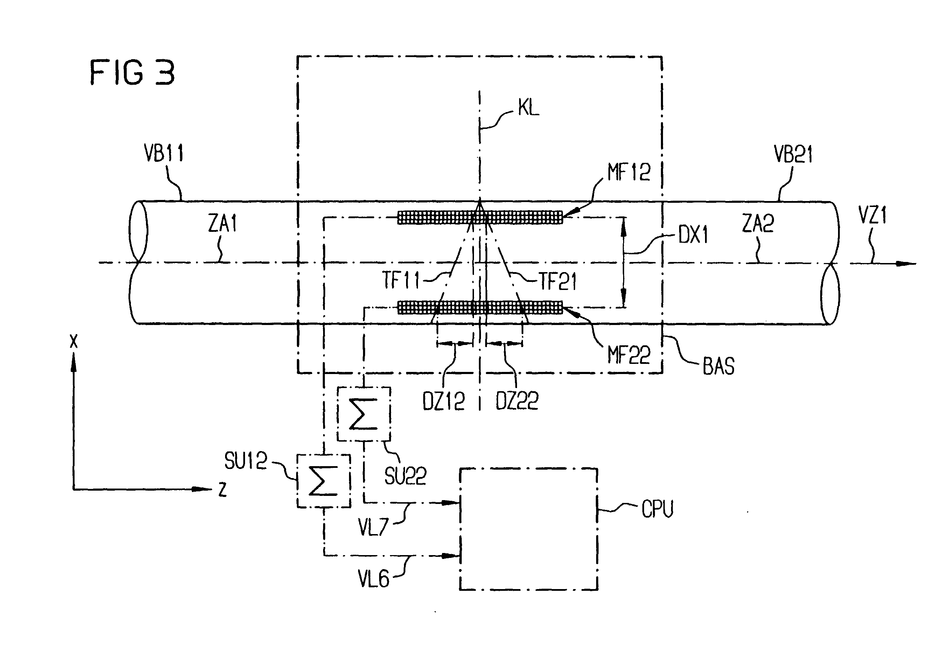

Die Figuren 3 mit 6 veranschaulichen jeweils anhand von schematischen Schattenbildern der beiden miteinander zu verschweißenden Faserenden FE1, FE2 von Figur 2 weitere, besonders bevorzugte Varianten des erfindungsgemäßen Verfahrens, mit denen gegenüber dem Meßprinzip nach Figur 1 Informationen über die jeweilige Faserstirnfläche mit höherer Meßgenauigkeit gewonnen werden können. Die Figuren 3 mit 6 zeigen dabei die Abbildungen VB11, VB21 der Faserenden FE1, FE2 beispielhaft in der X, Z-Betrachtungsebene von Figur 2.

Zur Durchführung dieser einer ersten bevorzugten Verfahrensvariante werden die beiden Faserenden FE1, FE2 zunächst soweit entlang ihrer Faserlängserstreckung, das heißt hier in Z-Richtung aufeinander zugefahren, daß ihre Faserabbildungen VB11, VB21 weitgehend lückenlos ineinander übergehen. Mit anderen Worten heißt das, daß die beiden Faserabbildungen VB11, VB21 zu einem einheitlichen Streifen zusammengesetzt sind, der sich in Faserlängsrichtung, das heißt hier in Z-Richtung Richtung durchgehend erstreckt. Dies veranschaulicht Figur 3. Die Längsseiten dieses Streifens liegen dort parallel zueinander. Die beiden Faserenden FE1, FE2 sind also derart zusammengebracht, daß zwischen ihnen kein Beleuchtungslicht mehr hindurchtreten kann. Zwischen den beiden dunklen Faserabbildungen bzw. Schattenbildern VB11, VB21 ist somit kein heller Spaltraum mehr vorhanden. Der Spaltraum zwischen den beiden Faserenden FE1, FE2 von Figur 2 läßt sich insbesondere dadurch zum Verschwinden bringen, daß das zweite Faserende FE2 von Figur 2 mit Hilfe der Positioniereinrichtung SGZ auf die in Z-Richtung feststehend angeordnete erste Faser FE1 zugefahren wird. Aufgrund von Beugungserscheinungen an den Stirnflächenrändern der beiden Faserenden dringt beim Zusammenfahren der Fasern bereits kein Licht mehr durch den Spaltraum, noch bevor sich die Faserenden physikalisch kontaktieren bzw. berühren. Die in der X, Z-Betrachtungsebene sichtbar werdenden Faserabbildungen VB11, VB21 definieren somit eine Art optische Faserenden. Das optische Faserende der jeweiligen Faser ragt dabei über deren physikalisches, tatsächliches Faserende aufgrund der Beugungs- und Brechungseffekte am Fasserstirnflächenrand hinaus. Insbesondere ist das optische Ende der jeweiligen Faser zwischen 0,5 und 5 µm, bevorzugt um etwa 1,5 µm gegenüber deren physikalischen Faserende hinaus verlängert. Derjenige axiale Längsabstand, bei dem während der Zusammenfahrbewegung der beiden Faserenden kein Licht mehr durch den Faserspalt dringt, wird im Rahmen der Erfindung mit Spaltschluß" bezeichnet. Er kennzeichnet also den Zustand der Faserprojektionsabbildungen, bei dem kein heller Spalt mehr zwischen den beiden Faserstirnflächen auftritt. Dieser axiale Längsabstand entspricht dann der Berührung optischer Faserenden. In der Figur 3 ist der Verlauf der tatsächlichen, physikalischen Stirnflächen der beiden Fasern FE1, FE2, zusätzlich strichpunktiert miteingezeichnet. Die physikalischen Faserstirnflächen sind dabei mit TF11 für die erste Faser FE1 sowie mit TF21 für die zweite Faser FE2 bezeichnet. Die physikalischen Faserenden TF11, TF21 berühren dabei gerade einander an der Soll-Kontaktierungslinie KL mit ihrer oberen stirnseitigen Faserecke.

Innerhalb eines Streifens der X, Z-Betrachtungsebene, der von den ineinander lückenlos übergehenden Längsseiten der Faserabbildungen VB11, VB21 von Figur 3 begrenzt wird, sind zwei Meßfenster MF12, MF21 festgelegt. Die beiden Meßfenster sind bezogen auf die Längsachsen der Fasern lateral um einen vorgebbaren Querabstand DX1 gegeneinander versetzt. Beide Meßfenster MF12, MF22 sind dem Übergangsbereich zwischen den beiden Faserabbildungen VB11, VB21 zugeordnet. Je ein Meßfenster ist in der Nähe einer der beiden Längsseiten des Schattenstreifens Vb11+VB21 positioniert. In der Figur 3 ist das erste Meßfenster MF12 der oberen Randbegrenzung des Schattenstreifens, sowie das zweite Meßfenster MF22 der unteren Randbegrenzung es Schattenstreifens zugeordnet. Allgemein ausgedrückt werden die beiden Meßfenster MMF12, MF22 derart innerhalb des dunklen Schattenstreifens ihrer beiden ineinander übergehenden Faserabbildungen VB11, VB21 positioniert, daß sie einen möglichst großen Querabstand in X-Richtung,das heißt senkrecht zur Faserlängserstreckung zueinander aufweisen. Die beiden Meßfenster MF12, MF22 sind im wesentlichen parallel zueinander festgelegt. Anfang und Ende der beiden Meßfenster MF12, MF22 sind jeweils etwa denselben axialen Längsorten, das heißt etwa den gleichen Z-Längsorten zugeordnet. Die beiden Meßfenster MF12, MF21 sind bezüglich der aufeinander fluchtenden Faserzentralachsen ZA1, ZA2 im wesentlichen achssymmetrisch zueinander festgelegt. Sie weisen beide etwa dieselbe Flächenform, hier Rechtecksform auf. In der Figur 3 ist die Erstreckung des jeweiligen Meßfensters MF12, MF22 in Faserlängsrichtung größer als quer zur Faserlängserstreckung gewählt. In der Figur 3 bedeckt das jeweilige Meßfenster MF12 bzw. MF22 eine rechteckförmige Fläche mit Vorzugsrichtung in Faserlängsrichtung. Diese Detektionsfläche setzt sich jeweils aus einer Vielzahl von lichtempfindlichen Elementen bzw. Pixelelementen zusammen. Diese Pixelelemente sind innerhalb des jeweiligen Meßfensters in Faserlängsrichtung in mehreren Zeilen organisiert, die in X-Richtung deckungsgleich nebeneinander liegen. In der Figur 3 weist das jeweilige Meßfenster beispielsweise drei in X-Richtung nebeneinanderliegende Meßzeilen auf. Diese Meßzeilen sind jeweils durch Pixelelemente gebildet, die in Z-Richtung betrachtet entlang einer gedachten Verbindungsgeraden nebeneinander liegen.

Das jeweilige Meßfenster MF12 bzw. MF22 kann vorzugsweise durch separate Detektionselemente gebildet sein, die als Bauelemente eigens in der X, Z-Betrachtungsebene entsprechend positioniert werden. Besonders zweckmäßig können die beiden Meßfenster MF12, MF22 dadurch festgelegt werden, daß jeweils entsprechende Pixelelemente aus der Gesamtheit der Pixelelemente des rechteckförmigen Bildsensors VKY von Figur 2 ausgewählt werden, der großflächig die beiden Faserabbildungen VB11, VB21 erfaßt. In der Figur 3 ist der rechteckförmige Bildausschnitt dieses Bildsensors zusätzlich strichpunktiert mit eingezeichnet und mit BAS bezeichnet. Die beiden Faserabbildungen VB11, VB21 treffen dabei nur auf einen Teil seiner Gesamtfläche.

Die Nummern der Pixelelemente des jeweiligen Meßfensters MF12, MF22 können vorzugsweise mit Hilfe der zentralen Rechen- und Steuereinrichtung CPU von Figur 2 festgelegt werden. Dazu steuert die Rechen- und Steuereinrichtung CPU die Speichereinrichtung VA, die das gesamte Projektionsbild mit den zwei Faserabbildungen VB11,VB21 in der X, Z-Betrachtungsebene festhält, entsprechend über die Steuerleitung VL3 an. Die Intensitätswerte der Pixelelemente innerhalb des jeweiligen Meßfensters MF12 bzw. MF22 werden mit Hilfe der Rechen- und Steuereinrichtung jeweils separat ausgelesen. Die Recheneinrichtung CPU bildet dann aus den Intensitätswerten des jeweiligen Meßfensters MF12 bzw. MF22 einen Summenwert und hält diesen zur weiteren Auswertung bereit.

Vorzugsweise wird der Summenwert der Intensitätsmeßwerte aller Pixelelemente des jeweiligen Meßfensters MF12 bzw. MF22 in der Speichereinrichtung VA festgehalten. In der Figur 3 werden die Intensitätsmeßwerte der Vielzahl von Pixelelementen des ersten Meßfensters MF12 über eine Datenleitung VL6 ausgelesen, in die ein Summierer SU12 eingefügt ist. Dieser Summierer SU12 addiert die Intensitätsmeßwerte des ersten Meßfensters MF12 auf und übergibt diesen Summenwert an die Recheneinrichtung CPU. Entsprechend dazu werden die Intensitätsmeßwerte der Vielzahl von Pixelelementen bzw. Meßzellen des zweiten Meßfensters MF22 mit Hilfe eines Summierers SU22 aufaddiert und dieser Summenwert über eine Leitung VL7 an die Recheneinrichtung CPU übertragen. Dieser Summenwert der Intensitätsmeßwerte des zweiten Meßfensters MF22 wird vorzugsweise in der Speichereinrichtung VA von Figur 2 abgelegt, die über die Datenleitung VL3 mit der Recheneinrichtung CPU verbunden ist.

Um den Gesamtintensitätspegel des Lichts messen zu können, das auf das jeweilige Meßfenster in der jeweiligen Betrachtungsebene fällt, kann es ggf. auch zweckmäßig sein, als Meßfenster jeweils lediglich eine einzige großflächige Dektorfläche vorzusehen. Ein solcher Detektor liefert dann unmittelbar die Gesamtintensitätssumme des Lichts, das auf ihn fällt, so daß die Summierer SU12, SU22 entfallen können.

Ausgehend von dieser Faserlage, bei der ein Spaltschluß" vorliegt, werden jetzt die beiden Faserenden relativ zueinander auseinanderbewegt. Im vorliegenden Ausführungsbeispiel wird die zweite Faser FE2 mit Hilfe der Positioniereinrichtung SGZ in Z-Richtung vom ersten Faserende FE1 wegbewegt. Beim Auseinanderfahren der beiden Faserenden FE1, FE2 öffnet sich dabei der Spaltraum zwischen den Faserabbildungen VB11, VB21 nicht gleichzeitig über den gesamten Faserquerschnitt, das heißt nicht sofort über die Gesamtlänge des Faserquerschnitts in X-Richtung. Denn die physikalischen Stirnflächen TF11, TF21 der beiden Faserenden stehen ja in der X, Z-Ebene betrachtet unter einem Gesamtwinkel WIG zueinander. Beim Auseinanderfahren der beiden Faserenden beginnt sich deshalb ein Spaltraum erst von demjenigen Rand des dunklen Streifens der beiden ineinander übergehenden Faserabbildungen VB11, VB21 her zu öffnen, bei dem die Stirnseitenkanten der beiden physikalischen Faserenden am weitesten voneinander in axialer Richtung voneinander entfernt liegen. In der X, Z-Betrachtungsebene sind die untere Faserstirnecke zwischen der unteren Faserlängsseite und der Stirnfläche TF11 der ersten Faser FE1 sowie die untere Faserstirnecke zwischen der Faserlängsseite und der Stirnfläche GF21 der zweiten Faser FE2 in axialer Richtung betrachtet am weitesten voneinander entfernt. Es öffnet sich deshalb im Bereich um die Kontaktierungslinie KL zunächst ein keilförmiger, insbesondere dreiecksförmiger Spaltraum von der unteren Längsseite des durchgehenden Schattenstreifens der beiden ineinander übergehenden Faserabbildungen VB11, VB21 von Figur 3 her. In der Figur 3 ist die Wegbewegung der zweiten Faser FE2 gegenüber der ersten Faser FE1 mit einem Pfeil VZ1 in der Z-Richtung veranschaulicht.

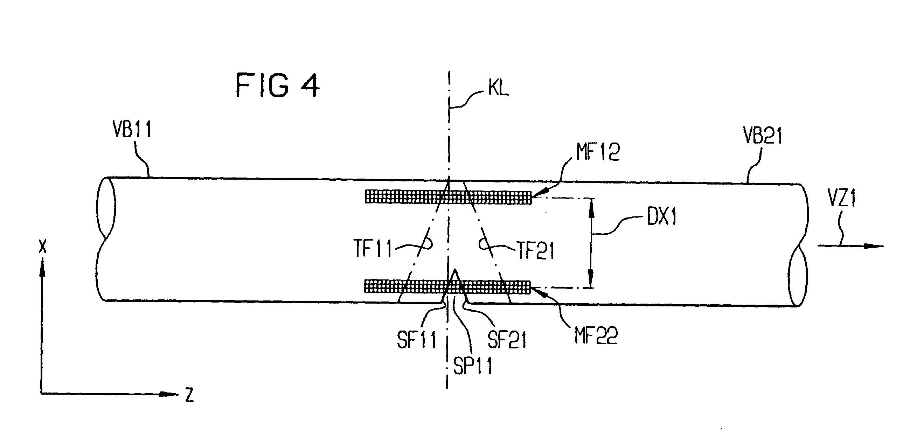

Beim Auseinanderfahren der beiden Faserenden FE1, FE2 in Z-Richtung kommen diese schließlich in eine Relativlage zueinander, bei denen das untere, zweite Meßfenster MF22 erstmalig die sich von der Unterseite der Faserabbildungen her auftuende Spaltöffnung SP1 erfaßt. Dies veranschaulicht Figur 4. Von den unteren Längsseiten der Faserabbildungen VB11, VB21 her öffnet sich im Bereich der Kontaktierungslinie KL in Faserquerrichtung, das heißt in X-Richtung ein Spaltraum SP11. Dieser Spaltraum SP11 wird vom zweiten Meßfenster MF22, das der unteren Randzone der Schattenbilder VB11, VB21 zugeordnet ist, erfaßt. Eine Teilmenge der Pixelelemente des zweiten Meßfensters MF22 wird also direkt, ohne Abschattung durch die Fasern, vom Beleuchtungslicht getroffen und erscheint deshalb nicht mehr dunkel wie die übrigen, von den Schattenbildern VB11, VB21 getroffenen Pixelelemente des zweiten Meßfensters MF22. In dieser Relativlage der Faserabbildungen von Figur 4 werden die Intensitätsmeßwerte des zweiten Meßfensters MF22 aufsummiert und als Summenwert zur Auswertung bereitgestellt. Gegenüber dem zweiten Meßfenster MF22 bleiben die Pixelelemente des ersten Meßfensters MF12 auf der gegenüberliegenden Randzone der Faserabbildungen VB11, VB21 weiterhin dunkel, da sich am Lageort des ersten Meßfensters MF12 noch kein Spaltraum auftut. Die Intensitätswerte des ersten Meßfensters MF12 werden ebenfalls in der Faserposition von Figur 4 aufsummiert und als Summenwert zur Auswertung bereitgestellt.

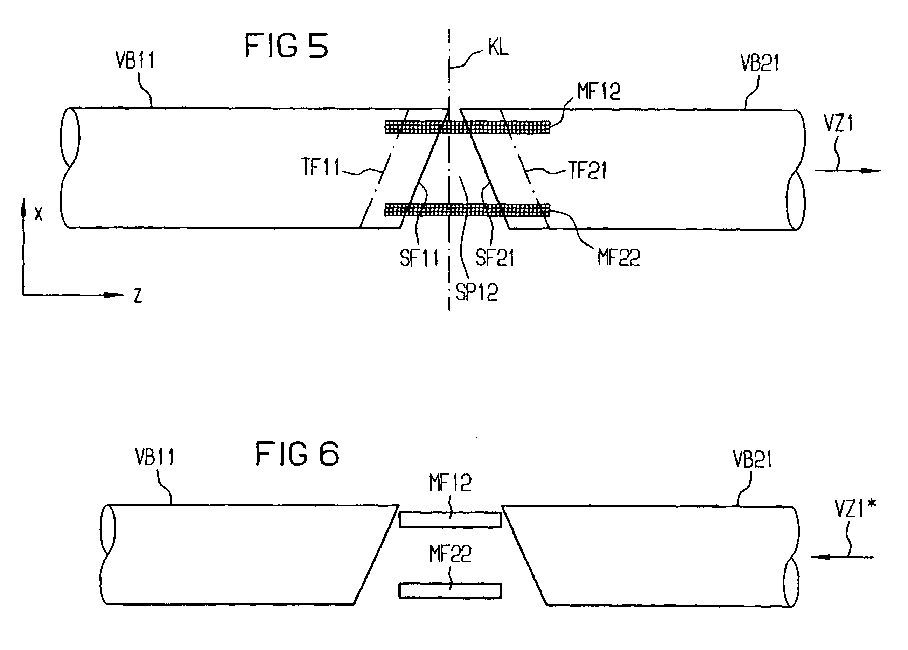

Wird das zweite Faserende noch weiter vom ersten Faserende in Z-Richtung wegbewegt, so erweitert sich der Spaltraum SP11 von Figur 4 in Faserquerrichtung auch auf das erste Meßfenster MF12 zu, bis sich schließlich der Spaltraum über den gesamten Faserquerschnitt erstreckt. Figur 5 zeigt die beiden Faserabbildungen VB11, VB21 mit einem solchen, sich über den gesamten Faserquerschnitt erstreckenden Spaltraum SP12. Die projizierte Stirnfläche der ersten Faserabbildung VB11 ist dort im Spaltraum mit SF11 bezeichnet. Die abgebildete Stirnfläche der zweiten Faserabbildung VB21 ist mit SF21 bezeichnet. Der Spaltraum SP2 ist in erster Näherung dreiecksförmig ausgebildet. Er erfaßt in der Figur 4 jetzt auch das erste Meßfenster MF12. Eine Teilmenge der Pixelelemente des ersten Meßfensters MF12 wird also vom Beleuchtungslicht getroffen. In dieser Faserposition der beiden Faserenden FE1, FE2 wird der Intensitätssummenwert des ersten Meßfensters MF12 ermittelt und zur Auswertung bereitgestellt. Entsprechend dazu wird der Intensitätssummenwert des zweiten Meßfensters MF22 analog ermittelt und ebenfalls zur Auswertung bereitgestellt.

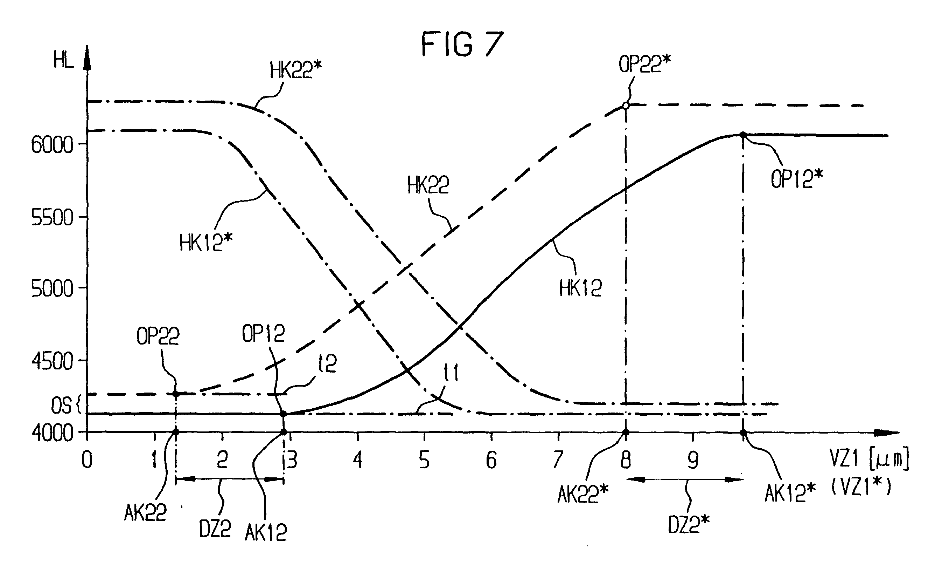

Figur 7 veranschaulicht den Verlauf der Intensitätssummenwerte der beiden Meßfenster MF12, MF22 in Abhängigkeit von der Entfernungsstrecke VZ1 des zweiten Faserendes FE2 vom ersten Faserende FE1. Entlang der Abszisse des Diagramms ist dabei der Verschiebeweg VZ1 aufgetragen, während der Ordinate des Diagramms die jeweiligen Intensitätssummenwerte HL der beiden Meßfenster zugeordnet sind. Werden die beiden Faserenden kontinuierlich auseinandergefahren und dabei fortlaufend die Summe der Intensitätswerte im jeweiligen Meßfenster aufgezeichnet, so ergibt sich für das erste Meßfenster MF12 eine zugehörige Intensitätssummenkurve HK12 sowie für das zweite Meßfenster MF22 eine gestrichelt eingezeichnete, zugehörige Intensitätssummenkurve HK22. Solange die beiden Faserabbildungen einander vollständig überlappen und noch kein Spalt im Faserquerschnitt sichtbar wird (vgl. Figur 3), bleiben die Intensitätssummenwerte der beiden Meßfenster MF12, MF22 bei der Verschiebebewegung des zweiten Faserendes vom ersten Faserende weg weitgehend dunkel. Denn beide Meßfenster werden jeweils auf ihrer gesamten Detektionsfläche noch von den Faserabbildungen VB11, VB21 vollständig abgeschattet. Die jeweilige Meßkurve HK12, HK22 zeigt deshalb zu Beginn der Faserauseinanderbewegung zunächst einen konstanten, d.h. hier in Figur 4 waagrechten Anfangsverlauf ihrer Intensitätssummenwerte.

Bei fortschreitender Auseinanderbewegung der beiden Faserenden öffnet sich schließlich ein Spalt zwischen den beiden Faserabbildungen und wandert bei fortschreitender Auseinanderbewegung der Faserenden in Faserquerrichtung zunächst nur in das zweite Meßfenster MF22 hinein. Ab dieser Entfernung der zweiten Faser von der ersten Faser kommt es deshalb zu einem deutlichen Anstieg der Intensitätssummenwerte im zweiten Meßfenster MF22.

Sind die beiden Faserenden schließlich so weit auseinandergefahren, daß für das zweite Meßfenster MF22 keine weitere Steigerung seiner beleuchtbaren Detektionsfläche mehr möglich ist, so werden ab dieser Faserentfernung konstant hohe Intensitätssummenwerte gemessen. Denn das Fenster MF22 wird dann maximal beleuchtet, d. h. eine weitere Steigerung seines Gesamtintensitätspegels ist dann nicht mehr möglich.

Damit weist die Meßkurve HK22 drei signifikante Kurvenabschnitte während dem Auseinanderbewegen der Fasern auf:

- Zu Beginn der Auseinanderfahrbewegung VZ1 verläuft die Pegelmeßkurve HK22 im wesentlichen waagrecht, d. h. etwa konstantem Niveau. Der Meßpegel ist dabei an dieser Stelle der Meßkurve HK22 am niedrigsten, da die gesamte Detektionsfläche des zweiten Meßfensters MF22 von den Schattenbildern der Fasern abgedunkelt wird.

- Sobald der sich in X-Richtung fortpflanzende Spaltraum beim weiteren Auseinanderbewegen der Faserenden das zweite Meßfenster MF22 erfaßt, steigt der Gesamtintensitätspegel des zweiten Meßfensters stetig an, da immer mehr Flächenanteile des zweiten Meßfensters vom in X - und in Z-Richtung immer größer werdenden Spaltraum getroffen werden. Der mittlere Abschnitt der Meßkurve HK22 ist somit durch eine Funktionenkurve gebildet, die mit wachsender Faserdistanz VZ1 ansteigt. Die Meßkurve HK22 weist dabei zwischen ihrem waagrechten Anfangsabschnitt und ihrem mittleren Teilabschnitt eine Art Abknickstelle OP22 auf.

- Der letzte Teilabschnitt der Meßkurve HK22 ist schließlich wiederum annäherungsweise durch eine Waagrechte gebildet. Denn ab einem bestimmten Zeitpunkt der Faserauseinanderbewegung kommt es zu keinem Zuwachs an Flächenanteilen des zweiten Meßfensters mehr, die durch den immer breiter werdenden Spalt noch zusätzlich hell beleuchtet werden könnten. Der Gesamtintensitätspegel des zweiten Meßfensters verbleibt dann annäherungsweise konstant. Die Meßkurve HK22 weist dabei zwischen ihrem mittleren ansteigenden Teilabschnitt und ihrem waagrechten Endabschnitt eine Art Abknickstelle OP22* auf.

Aus dieser Intensitätssummenkurve HK22 des zweiten Meßfensters MF22 kann somit z.B. derjenige Zustand des zweiten Meßfensters MF22 bei der Faserauseinanderbewegung eindeutig ermittelt werden, ab dem erstmalig Licht durch den sich auftuenden Faserspalt SP12 auf das zweite Meßfenster MF22 trifft. Diese Helligkeitsverteilung im zweiten Meßfenster kann beispielsweise dadurch ermittelt werden, daß die gedachte Verlängerung t2 des waagerechten Anfangsverlaufs der Meßkurve HK22 gebildet wird. Dort, wo diese gedachte Verlängerungsgerade t2 die Meßkurve HK22 letztmals am Berührungspunkt OP22 kontaktiert, ist dann gerade derjenige Moment beim Auseinanderfahren der Faserenden in eindeutiger Weise festgelegt, bei dem das zweite Meßfenster von dem sich in X-Richtung sukzessive aufmachenden Spalt erstmalig erfaßt wird. Diesem Berührungspunkt OP22 ist der Faserverschiebeweg AK22 zugeordnet.

Die Meßkurve HK12 des ersten Meßfensters MF12 ist ähnlich wie die Meßkurve HK22 ausgebildet. Sie setzt sich insbesondere aus drei entsprechenden, charakteristischen Teilabschnitten zusammen. Da das erste Meßfenster MF11 während der Faserauseinanderbewegung VZ1 aber im Unterschied zum zweiten Meßfenster MF22 erst zu einem späteren Zeitpunkt vom sich queraxial ausbreitenden Spaltraum erfaßt wird, verbleibt es allerdings länger als das zweite Meßfenster MF22 dunkel. Es ergibt sich somit für die Intensitätssummenwert- Meßkurve HK12 des ersten Meßfensters MF12 zunächst ein längerer Anfangsabschnitt, bei dem die Meßkurve HK12 waagerecht verläuft. Im ersten Meßfenster MF12 kann erst eine Spaltöffnung zwischen den beiden Faserenden registriert werden, nachdem die beiden Faserenden noch um eine weitere Wegstrecke DZ2 gegenüber ihrer Entfernung AK22 bei der vom zweiten Meßfenster MF22 registrierten Spaltöffnung verfahren wurden. Die gedachte Verlängerung des waagerechten Teilstücks der Meßkurve HK12 ist in der Figur 7 strichpunktiert eingezeichnet und mit t1 bezeichnet. Sie berührt die Meßkurve HK12 in Abzissenrichtung betrachtet letztmalig beim Kontaktierungspunkt OP12. Diesem Kontaktierungspunkt OP12 ist der Verschiebeweg AK12 zugeordnet. Ab dieser Faserdistanz AK12 werden vom sich ausweitenden Spalt immer mehr Pixelelemente der ersten Meßzeile beleuchtet, so daß es zu enem Helligkeitsanstieg kommt. Dieser Helligkeitsanstieg der Meßkurve HK12 klingt erst dann ab und geht in eine Waagerechte über, nachdem die beiden Faserenden soweit auseinanderbewegt wurden, daß keine weiteren Pixelelemente des ersten Meßfensters mehr im Spaltraum zu liegen kommen und vom Beleuchtungslicht getroffen werden. Da das erste Meßfenster erst später vom sich aufweitenden Spaltraum zwischen den beiden Faserenden während deren Auseinanderbewegung erfaßt wird, liegt die Meßkurve HK12 gegenüber der Meßkurve HK22 annäherungsweise um DZ2 in Abszissenrichtung versetzt.

Die Meßkurve HK12 liegt dabei unterhalb der Meßkurve HK22. Der Grund dafür ist, daß das zweite Meßfenster MF22 derjenigen Spaltzone zugeordnet ist, bei der sich die physikalischen Faserenden in axialer Richtung am weitesten gegenüberstehen. Selbst dann, wenn die beiden Faserenden soweit zusammengefahren sind, daß sich aufgrund von Lichtbeugungs- und/oder Brechungseffekten bereits ein vollständiger optischer Spaltschluß" über den gesamten Faserquerschnitt ergibt, die beiden physikalischen Faserenden allerdings noch nicht einander kontaktieren, erscheint der Übergangsbereich zwischen den beiden Faserabbildungen beim zweiten Meßfenster MF22 heller als beim ersten Meßfenster MF12.

Folgender Vergleich zwischen den beiden Intensitätsmeßkurven HK12, HK22 kann insbesondere zur gleichzeitigen Informationsgewinnung über die Faserstirnflächen der beiden Faserenden FE1, FE2 zweckmäßig sein: Aus der Meßkurve HK22 wird derjenige Zustand des zweiten Meßfensters MF22 registriert, bei dem ein Wechsel von dunkel nach hell stattfindet. Ausgehend von diesem Zustand wird dann derjenige Verschiebeweg bestimmt, um den die beiden Faserenden zusätzlich auseinander verfahren werden, um auch beim ersten Meßfenster MF12 einen Wechsel von dunkel nach hell registrieren zu können. Derjenige Verfahreweg DZ2, um den die beiden Faserenden zusätzlich ausgehend von ihrer Faserposition, bei der erstmalig beim zweiten Meßfenster eine Spaltöffnung auftritt, weiter auseinandergefahren werden, um zeitlich später auch beim ersten Meßfenster MF12 eine Spaltöffnung zu erhalten, entspricht dann dem Gesamtversatz der Faserstirnflächen in Faserlängsrichtung von einem zum anderen Meßfenster gemessen.

In der Figur 3 ist für die Stirnfläche TF11 deren axialer Versatz DZ12 zwischen den beiden Meßzeilen MF12, MF22 zusätzlich mit eingezeichnet und mit DZ12 bezeichnet. Der axiale Einzelversatz der Stirnfläche SF21 zwischen den beiden Meßfenstern MF12, MF22 ist in der Figur 3 ebenfalls zusätzlich strichpunktiert eingezeichnet und mit DZ22 bezeichnet. Der aus den Meßkurven HK12, HK22 von Figur 7 ermittelte zusätzliche Verfahrweg DZ2 bildet dann die Summe dieser beiden einzelnen axialen Stirnflächenversätze, so daß gilt DZ2 = DZ12 + DZ22. Da der Querabstand DX1 der beiden Meßfenster MF12, MF22 in transversaler Richtung, das heißt in X-Richtung bekannt ist, läßt sich der Gesamtfehlerwinkel WIG zwischen den Stirnflächen der beiden Faserenden insbesondere nach der Beziehung WIG = arctan (DZ2/DX1) ermitteln.

Allgemein ausgedrückt wird also an mindestens zwei Transversalstellen im Übergangsbereich zwischen den beiden Faserabbildungen das Fortschreiten der Spaltöffnung beim Auseinanderbewegen der beiden Fasern beobachtet. Insbesondere wird derjenige Wegunterschied ermittelt, um den die beiden Faserenden zusätzlich auseinanderverfahren werden, um ausgehend von einer ersten Spaltöffnung bei einem der beiden Meßfenster auch beim zweiten Meßfenster eine Spaltöffnung registrieren zu können. Die beiden Faserenden werden dazu zunächst in eine solche Ausgangsposition gebracht, bei der beide Meßfenster vollständig innerhalb der Faserabbildungen liegen. Dann wird mindestens eine der Fasern von der anderen Faser wegbewegt, so daß sich ein Spaltraum von einer Faserrandfläche zur anderen ausbreitet. Während der Auseinanderbewegung der Faserenden wird registriert, zu welchem Zeitpunkt der Faserauseinanderbewegung sich sowohl in ersten als auch im zweiten Meßfenster jeweils erstmalig ein Helligkeitswechsel von dunkel nach hell ergibt. Dies ist der Zeitpunkt der Faserauseinanderbewegung, bei dem das jeweilige Meßfenster vom sich aufweitenden Spalt erstmalig erfaßt wird. Ergibt sich ein Zeitversatz zwischen diesen Dunkel-Hell Wechseln der beiden Meßfenster, so weisen die Faserstirnflächen einen Winkelfehler zwischen sich auf. Bezogen auf den Helligkeitsanstieg im ersten Meßfenster werden also die beiden Faserenden soweit auseinanderbewegt, daß sich auch im zweiten Meßfenster ein Helligkeitswechsel von dunkel nach hell einstellt. Zur Ermittlung des Verschiebewegs DZ2, um den die beiden Faserenden zusätzlich auseinanderbewegt werden, um zeitverzögert auch beim zweiten, anderen Meßfenster eine Spaltöffnung registrieren zu können, genügt somit bereits die Beobachtung eines einzigen Helligkeitszustandes im jeweiligen Meßfenster.

Um den Versatz DZ2 der beiden Meßkurven HK12, HK22 ermitteln zu können, kann es gegebenenfalls auch zweckmäßig sein, im jeweiligen Meßfenster denjenigen Zustand zu erfassen, ab dem sich keine nennenswerte Intensitätssummenänderung mehr ergibt. In der Figur 7 verläuft die Meßkurve HK12 ab dem Intensitätssummenwert OP12* (=Abknickstelle) bei weiterer Vergrößerung des Faserabstandes VZ1 weitgehend konstant. Diesem Intensitätssummenwert OP12* ist der Verschiebeweg AK12* zugeordnet. Entsprechend dazu geht die Meßkurve HK22 ab dem Intensitätssummenwert OP22* bereits schon beim Verschiebeweg AK22*< AK12* im wesentlichen in eine konstante Gerade über. Ab dem Verschiebeweg AK22* gelangen also beim weiteren Auseinanderfahren der Faserenden keine weiteren Pixelelemente des zweiten Meßfensters mehr in das helle Beleuchtungslicht des immer breiter werdenden Spaltraums. Der relative Verschiebeweg DZ2* zwischen den beiden Intensitätssummenwerten (Abknickstellen) OP12* und OP22* entspricht dann wiederum der Gesamtsumme der Einzelversätze der Faserstirnflächen TF11. TF21 in Z-Richtung zwischen den beiden Meßfenstern MF12, MF22. Es gilt also insbesondere DZ2* = DZ2 = DZ12 + DZ22.

Bei dieser abgewandelten Meßmethode wird derjenige Zustand im Verlauf des Gesamtlichtpegels des jeweiligen Meßfensters während der Faserauseinanderbewegung registriert, bei dem der Lichtpegel bzw. Intensitätssummenwert dieses Meßfensters keine signifikante Änderung mehr aufzeigt. Es wird dabei derjenige Verschiebeweg DZ2* ermittelt, um den die beiden Faserenden zusätzlich auseinanderbewegt werden, um zeitversetzt zu einem ersten der mindestens zwei Meßfenster auch in dem zweiten Meßfenster denjenigen Zustand registrieren zu können, ab dem sich keine signifikante Helligkeitsveränderung mehr ergibt. Es genügt somit bereits die Beobachtung eines einzigen Helligkeitszustandes im jeweiligen Meßfenster.

Obige zwei Meßverfahren, die beispielhaft anhand der Figuren 3 mit 5, 7 erläutert wurden, sind weitgehend unabhängig davon, ob die beiden Meßfenster in der Ausgangslage der beiden Faserenden von Figur 3 (Spaltschluß über den gesamten Faserquerschnitt) die gleiche Grundhelligkeit aufweisen. Beide Verfahren stellen lediglich darauf ab, Ähnlichkeiten im Verlauf der Intensitätssummenwerte der beiden Meßfenster miteinander zu vergleichen. Insbesondere derjenige Verschiebeweg, um den die beiden Faserenden verschoben werden, um in Bezug auf ein erstes der beiden Meßfenster auch im zweiten, anderen Meßfenster denselben Helligkeitsverlauf des insgesamt erfaßten Lichtpegels zu erhalten, ergibt dann den Gesamtversatz der Faserstirnflächen zwischen den beiden Meßfenstern in Z-Richtung an. Allgemein ausgedrückt werden also die Intensitätswerte der beiden Meßfenster an mindestens zwei Verfahrstellen der Faserauseinanderbewegung aufgenommen und miteinander verglichen.

Die Faserauseinanderbewegung der beiden Faserenden FE1, FE2 wird vorzugsweise mit einer größeren örtlichen Auflösung als die Abtastung der Faserabbildungen jeweils in den Meßfenstern MF12, MF22 durchgeführt. Die Fasern FE1, FE2 werden also in Z-Richtung schrittweise jeweils nur um eine solche Wegstrecke auseinandergefahren, die unterhalb der Länge eines Pixelelements in Verfahr-, hier Z-Richtung liegt. Die beiden Faserenden werden somit relativ zueinander mit Schrittweiten auseinandergefahren, die im "Subpixelbereich" liegen. Je kleiner die Schrittweite der Faserauseinanderbewegung gewählt wird, desto höher wird dabei die Genauigkeit, mit der Informationen über den Spaltbereich zwischen den beiden Faserenden gewonnen werden kann.

In der Praxis werden die beiden Faserenden zweckmäßigerweise sukzessive um jeweils eine vorgebbare Schrittweite auseinandergefahren, die beiden Faserenden angehalten, in diesen festgehaltenen Faserpositionen die Intensitätssummenwerte, d.h. Gesamtlichtpegel der Meßfenster gebildet, und diese Intensitätssummenwerte zur Auswertung festgehalten. Auf diese Weise können durch schrittweises Verschieben der Faserenden die beiden Meßkurven HK12, HK22 für festgelegte Faserabstände VZ1 und damit für diskrete Faserentfernungen aufgenommen werden.

Bei der erfindungsgemäßen Meßvarianten nach den Figuren 3 mit 5 sowie 7 ergeben sich insbesondere folgende Vorteile:

Es wird nur der Faserabstand bei Beginn der Spaltöffnung betrachtet. Es spielt dabei keine Rolle, wie groß die Helligkeit im jeweiligen Meßfenster zu diesem Zeitpunkt ist. Wichtig ist dabei nur, daß derjenige Zeitpunkt registriert wird, ab dem die Helligkeit im Meßfenster beginnt, sich zu ändern. Damit ist das erfindungsgemäße Meßverfahren weitgehend unempfindlich gegenüber räumlichen und zeitlichen Inhomogenitäten der Helligkeit im betrachteten Bildausschnitt.

Die Meßgenauigkeit bei diesen besonders bevorzugten Varianten des erfindungsgemäßen Verfahrens hängt weiterhin nur in geringem Maße von der Auflösungsqualität des ausgewerteten Bildes ab. Vielmehr wird die Genauigkeit von der Auflösung bestimmt, mit der der Abstand der Fasern in Z-Richtung verändert werden kann. Diese ist jedoch in üblichen Spleißgeräten aufgrund der erforderlichen Positioniergenauigkeit für die Fasern sehr hoch. Sie liegt vorzugsweise etwa bei 8 nm Schrittweite. In praktischen Tests wurde eine Meßgenauigkeit von etwa ± 0,1° erreicht, was einem Fehler in der Dämpfungsbestimmung von ± 0,0004 dB entspricht. Aufgrund von weiteren Einflüssen auf die Meßgenauigkeit läßt sich in der Praxis eine Genauigkeit von etwa ± 0,02 dB bei der Dämpfungsbestimmung erzielen.

Weiterhin zeichnen sich die verschiedenen Varianten des erfindungsgemäßen Meßverfahrens insbesondere dadurch aus, daß es ohne zusätzliche Hardwarekomponenten in bisherigen Spleißgeräten implementiert werden kann.

In Erweiterung des Verfahrens können schließlich in vorteilhafter Weise mehr als zwei Meßfenster in der jeweiligen Betrachtungsebene in der Übergangszone zwischen den beiden dortigen Faserabbildungen angeordnet werden. Je größer die Anzahl der Beobachtungsfenster wird, desto höher wird die Genauaigkeit, mit der Informationen über den Spaltbereich gewonnen werden können. Insbesondere kann dann der tatsächliche Verlauf des Faserstirnflächenrandes zwischen je zwei Meßfenstern approximativ ermittelt werden. Mit diesen Informationen kann man somit Aussagen über die Ebenheit der Faserstirnflächen gewinnen.

Weisen die Stirnflächen der Faserenden relativ große Endflächenwinkelfehler auf, so kann es ggf. passieren, daß der queraxiale Spalt zwischen den zwei Faserenden nicht für alle Meßfenster zu Beginn des erfindungsgemäßen Meßverfahrens vollständig geschlossen werden kann, weil sich die Faserenden bereits physikalisch berühren. In diesem Fall wird zweckmäßigerweise die Helligkeit in der jeweiligen Beobachtungszone bzw. im jeweiligen Meßfenster, in der der Faserspalt geöffnet ist, gespeichert und dann die Fasern so lange auseinandergefahren, bis in der anderen Beobachtungszone, bzw. im anderen Meßfenster dieselbe Helligkeit erreicht wird. Mit anderen Worten ausgedrückt, kann es auch zweckmäßig sein, aus den Verläufen der Intensitätssummenwerte HK12, HK22 von Figur 7 diejenigen Verschiebewege zwischen den beiden Fasern zu ermitteln, bei denen jeweils etwa dieselbe Helligkeit, insbesondere derselbe Intensitätssummenwert eintritt. Ein Anfangsoffset OS, um den sich die Intensitätssummenwerte der Meßkurven wie z.B. HK12, HK22 der beiden Meßfenster wie z.B. MF12, MF22 unterscheiden, kann gegebenenfalls dadurch berücksichtigt werden, daß dieser Offset OS zur niedrig gelegeneren Meßkurve HK12 aufaddiert wird. Dadurch lassen sich Inhomogenitäten bei der Beleuchtung der Meßfenster weitgehend kompensieren.

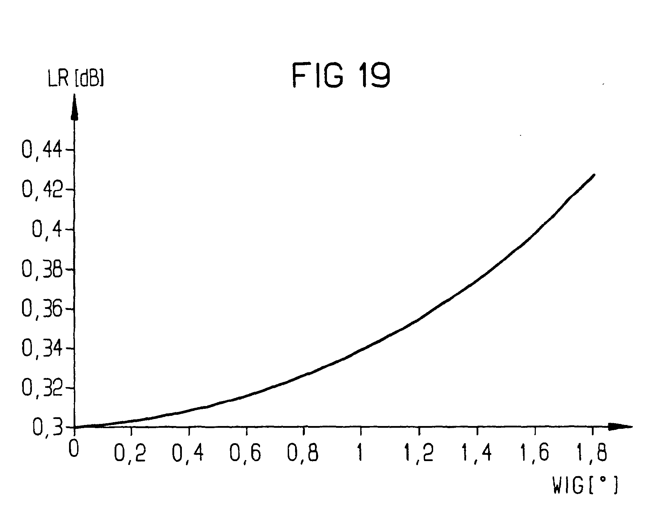

In der Praxis lassen sich die senkrecht zur Faserachse stehenden Endflächen jedoch nur schwer herstellen. Übliche Fasertrenngeräte erzeugen bei Monomodequarzglasfasern im Mittel Endflächenwinkel von unter 0,8 Grad. Dieses kann bei ungünstiger Orientierung der Faserstirnflächen zueinander zu einem Gesamtfehlerwinkel von bis zu 1,6° führen. Bei diesem Gesamtfehlerwinkel erhöht sich die Luftspaltdämpfung von 0,3 dB auf 0,4 dB, wie aus dem Diagramm von Figur 19 ersichtlich ist. Dort ist entlang der Abszisse der Gesamtwinkelfehler WIG aufgetragen, während der Ordinaten die Luftspaltdämpfung LR zugeordnet ist. Um den mittleren Fehler bei der Dämpfungsbestimmung zu minimieren, wird zweckmäßigerweise für die Luftspaltdämpfung LR ein Wert 0,35 dB angesetzt, so daß bei sehr guten Faserendflächen die Dämpfung 0,05 dB zu schlecht und im ungünstigsten Fall 0,05 dB zu gut angezeigt wird. Um die Spleißdämpfung LS genauer als ± 0,05 dB ermitteln zu können, wird der Gesamtwinkelfehler zwischen den Stirnflächen der Faserenden nach dem erfindungsgemäßen Verfahren bestimmt. Insbesondere mit Hilfe des Diagramms nach Figur 19 kann dann die zugehörige Luftspaltdämpfung abgelesen werden und in die Formel nach eingesetzt werden.

Um den räumlichen Gesamtwinkel der Stirnflächen der beiden Faserenden FE1, FE2 vonn Figur 2 ermitteln zu können, werden die aufgezeigten Meßverfahren zur Ermittlung der Gesamtsumme der Stirnflächenversätze in Z-Richtung zwischen den beiden Meßfenstern in mindestens zwei Betrachtungsebenen durchgeführt. Vorzugsweise werden die beiden Betrachtungsebenen um etwa 90° voneinander verschieden gewählt. Das jeweilige Meßverfahren oder beliebige Kombinationen der vorstehend aufgeführten Meßprinzipien werden insbesondere sowohl in der X,Z- als auch in der Y, Z-Betrachtungsebene durchgeführt. Für den räumlichen Gesamtwinkel ergibt sich dann

$$\text{WIR} = \arctan \sqrt{(\tan \text{WIG})^2 + (\tan \text{WIG*})^2},$$

wobei

WIR der räumliche Gesamtwinkel zwischen den beiden Faserstirnflächen,

WIG der Gesamtfehlerwinkel zwischen den Faserstirnflächen in der X, Z-Betrachtungsebene, und

WIG* der Gesamtfehlerwinkel zwischen den beiden Faserstirnflächen in der Y, Z-Betrachtungsebene ist.

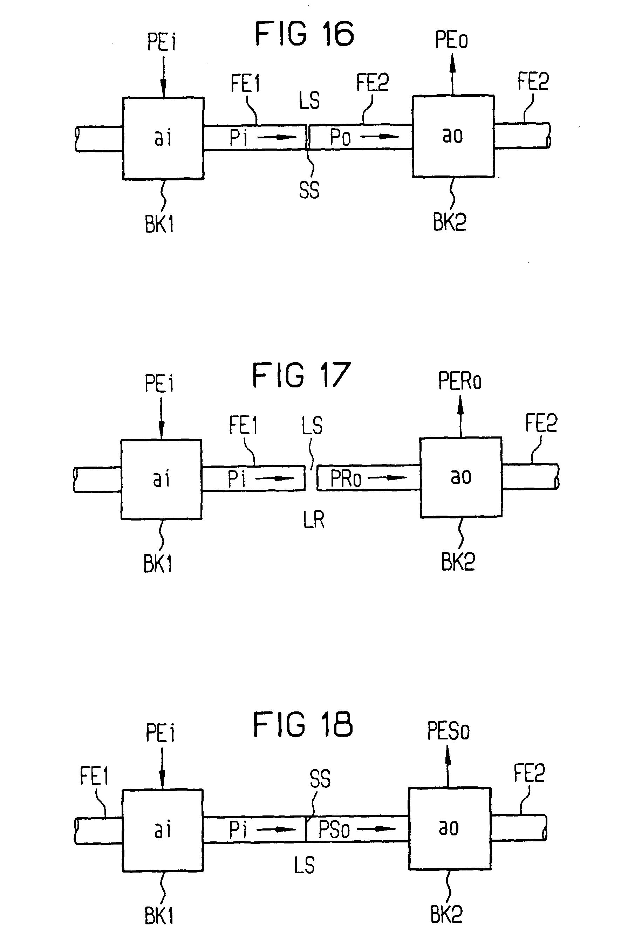

Der räumliche Gesamtfehlerwinkel zwischen zwei miteinander zu verschweißenden Faserstirnflächen ist insbesondere für die Bestimmung der Spleißdämpfung der beiden miteinander verschweißten Faserenden von Bedeutung. Bei Spleißmeßgeräten interessiert u.a. die Dämpfung, die durch die fertige Spleißstelle hervorgerufen wird. Um diese Dämpfung zu ermitteln, wird vorzugsweise Licht vor der Spleißstelle SS mit Hilfe eines ersten Einkoppelelements BK1, insbesondere einem Biegekoppler, in die erste Faser FE1 eingekoppelt. Dieses Meßlicht wird hinter der Spleißstelle SS aus der zweiten Faser FE2 mit einem Auskoppelglied BK2, insbesondere einem Biegekoppler ausgekoppelt. Dieses Meßprinzip ist schematisch in Figur 16 dargestellt. Dort wird das Meßlicht mit der ursprünglichen Leistung PEi über das Einkoppelelement BK1 in die erste Faser FE1 eingespeist. Beim Einkoppeln kommt es zu Dämpfungsverlusten, die durch einen Koppelfaktor ai berücksichtigt werden. In der ersten Faser FE1 breitet sich somit Meßlicht lediglich mit einer Lichtleistung Pi aus, für die gilt:

$$PEi = ai \cdot Pi.$$

Analog dazu wird die Leistung Po des in die zweite Faser FE2 übergekoppelten Meßlichts mit dem Auskoppelelement BK2 in die externe Leistung PEo umgesetzt. Auch bei der Auskopplung kommt es dabei zu Verlusten, die sich wiederum mit einem Koppelfaktor ao beschreiben lassen, so daß gilt

$$PEo = ao \bullet Po.$$

Im allgemeinen sind beide Koppelfaktoren ao, ai unbekannt. Daher wird zweckmäßigerweise vor der endgültigen Verbindung der beiden Faserenden FE1, FE2 eine Referenzmessung durchgeführt. Als Referenzwert dient die Dämpfung LR des Luftspalts LS, der sich zwischen den noch nocht verbundenen Lichtleitfasern FE1, FE2 von Figur 17 bildet. Stehen sich die beiden Faserenden zum Beispiel in einem Abstand von ca. 5µm mit parallel und fluchtend aufeinander ausgerichteten Faserkernen gegenüber und sind ihre Endflächen exakt senkrecht zur Faserachse ausgerichtet sowie plan ausgebildet, so ergibt sich ein Referenzwert für die Luftspaltdämpfung von etwa 0,3 dB. Dabei gilt dann

$$LR = 10 \log \frac{ai \cdot PEi}{ao \cdot PERo}$$

Dabei ist PERO die ausgekoppelte Leistung hinter dem Luftspalt LS bei der Referenzmessung. Bei der danach folgenden eigentlichen Spleißdämpfungsmessung bleiben die Koppelfaktoren ai und ao, sowie die eingekoppelte Leistung PEi vorzugsweise weitgehend unverändert. Für die Spleißdämpfung LS nach Durchführung des Spleißes nach Figur 18 ergibt sich dann:

$$LS = 10 \cdot \log \left( \frac{ai \cdot PEi}{ao \cdot PESo} \right)$$

PESo gibt dabei im Fall der fertigen Spleißverbindungen die extern ausgekoppelte Leistung an. Mit Hilfe von LR lassen sich die Unbekannten in obiger Formel für die Spleißdäpfung LS eliminieren, so daß folgende Beziehung erhalten wird:

$$LS = LR + 10 \cdot \log \left( \frac{PERo}{PESo} \right)$$

Weiterhin kann es zweckmäßig sein, die kinematische Umkehr der Meßverfahren nach den Figuren 2 mit 5 durchzuführen. Dies veranschaulicht Figur 6. Dort werden die beiden Faserenden zunächst in einen Ausgangszustand gebracht, bei dem deren Faserabbildungen VB11, VB21 z.B. in der X, Z-Betrachtungsebene soweit auseinanderliegen, daß die Meßfenster MF12, MF22 vollständig im Spaltraum liegen. Dann wird die zweite Faser FE2 auf die erste Faser FE1 in Z-Richtung VZ1* zu verfahren. Während des Zusammenschiebens der beiden Faserabbildungen aufeinander, werden die Intensitätswerte der Meßfenster separat aufgenommen und zur Auswertung bereitgestellt. Insbesondere werden jeweils die Intensitätssummenwerte der Meßfenster gebildet. Es ergeben sich für die beiden Meßfenster MF22, MF12 zugehörige Meßkurven HK22*, HK12*, die spiegelbildlich zu den Meßkurven HK22, HK12 von Figur 7 liegen. Die Meßkurven HK22*, HK12* sind dort im Intensitätsdiagramm strichpunktiert eingezeichnet. Da sich der Spalt zuerst in der Nähe des ersten Meßfensters MF12 schließt, ergibt sich zuerst ein Abfall der Intensitätssummenwerte des ersten Meßfensters. Erst nach einem verzögerten Vorschubweg der Faserenden aufeinander ergibt sich auch im zweiten Meßfenster ein Abfall der Intensitätssummenwerte. Durch Vergleich der Intensitätssummenwerte der beiden Meßfenster lassen sich somit ebenfalls Informationen über die Faserstirnflächen ableiten. Insbesondere läßt sich ebenfalls die Gesamtsumme der axialen Faserstirnversätze in Z-Richtung zwischen den beiden Meßfenstern ermitteln.

Bei den zwei sich gegenüberstehenden Faserenden der Figuren 3 mit 6 ist das jeweilige Meßfenster zweckmäßigerweise derart dimensioniert und plaziert, daß bei der Relativbewegung der beiden Fasern voneinander weg oder aufeinander zu, jedes Meßfenster mindestens einmal, bevorzugt während dem überwiegenden Zeitraum der Verschiebebewegung, eine individuell zugeordnete Randstelle der Stirnfläche der einen sowie der anderen Faser gleichzeitig erfaßt oder überschreitet. Dadurch lassen sich in vorteilhafter Weise Informationen über das Verhältnis beider Faserstirnflächen zueinander, insbesondere ihr Gesamtschiefstellungswinkel, in einem einzigen Meßvorgang gewinnen.

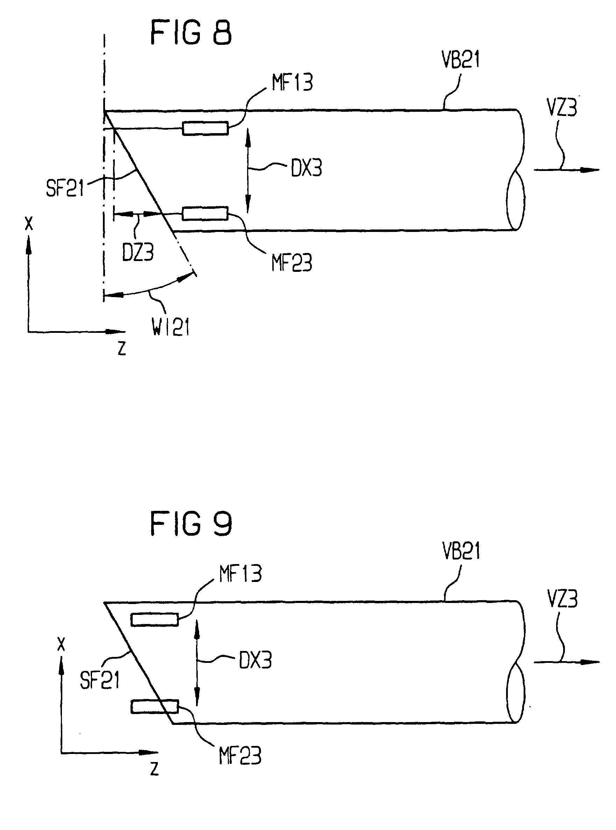

Die Figuren 8 mit 10 veranschaulichen anhand von schematischen Schattenbildern VB21 der Faser FE2 in der X, Z-Betrachtungsebene, wie über deren Stirnfläche SF21 Informationen einzeln gewonnen werden können. In den Figuren 8 mit 10 sind zwei Meßfenster MF13, MF23 jeweils denselben Z-Länsorten zugeordnet. Sie sind innerhalb eines Streifens der X, Z-Betrachtungsebene festgelegt, der von den gedachten Verlängerungen der Längseiten der Faserabbildung VB21 begrenzt wird. Sie weisen in X-Richtung betrachtet einen lateralen Versatz DX3 voneinander auf. Die Faser FE2 wird zunächst in eine solche Ausgangsposition gebracht, daß mindestens zwei Meßfenster MF13, MF23 vollständig innerhalb der Faserabbildung VB21 der X, Z-Betrachtungsebene liegen. Ausgehend von dieser Ausgangsposition wird die Faser soweit über die Meßfenster geschoben, bis jedes Meßfenster MF13, MF23 den Rand der abgebildeten Stirnfläche SF21 an unterschiedlichen, d.h. hier zwei verschiedenen Randstellen teilweise oder ganz überschritten hat. Dabei werden die Intensitätsmeßwerte der Beobachtungs-Meßfenster fortlaufend aufgenommen und zur Auswertung bereitgestellt. In der Figur 8 wird das Faserende in Z-Richtung VZ3 gegenüber den festgelegten Meßfenstern MF13, MF23 verschoben. Da sich das zweite Meßfenster MF23 in Z-Richtung betrachtet näher am Faserrand SF21 befindet, überquert dieses zweite Meßfenster MF23 zunächst alleine, d.h. zuerst den Faserstirnflächenrand SF21. Figur 9 zeigt diese Position der Faserabbildung VB21.

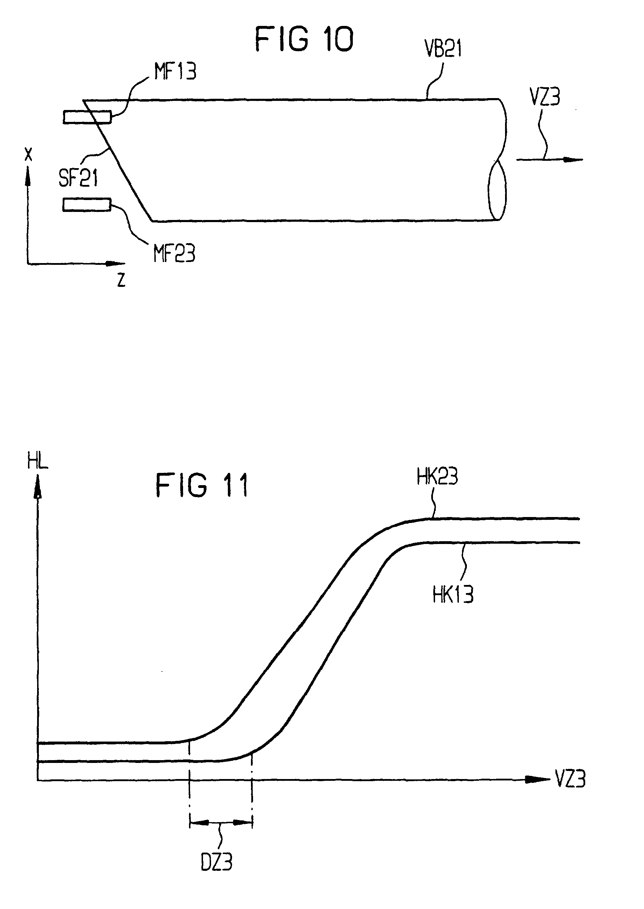

Während das zweite Meßfenster MF23 bereits zum überwiegenden Teil außerhalb der Faserabbildung VB21 liegt, befindet sich dort in Figur 9 das erste Meßfenster MF13 noch innerhalb der Faserabbildung VB12. Das zweite Meßfenster MF23 wird also früher hell als das erste Meßfenster MF13. Wird die zweite Faser FE2 noch weiter in Z-Richtung von den ortsfest festgelegten Meßfenstern wegbewegt, so überquert schließlich auch der Faserrand SF21 das erste Meßfenster. Figur 10 zeigt diese Position der Faserabbildung VB21. Während das zweite Meßfenster MF23 bereits vollständig außerhalb der Faserabbildung VB21 liegt, wird erst jetzt das erste Meßfenster MF13 vom Faserstirnflächenrand SF21 gequert.

Figur 11 zeigt in schematischer Darstellung ein Helligkeitsdiagramm, das bei der erfindungsgemäßen Variante nach den Figuren 8 mit 10 aufgenommen werden kann. Entlang der Abszisse ist der relative Verschiebeweg VZ3 der Faser FE2 gegenüber den ortsfesten Meßfenstern MF13, MF23 aufgetragen. Der Ordinaten des Helligkeitsdiagramms sind die Intensitätssummenwerte der beiden Meßfenster MF13, MF23 jeweils separat zugeordnet. Während der Verschiebebewegung des Faserendes FE2 gegenüber den Meßfenstern MF13, MF23 ergeben sich zugehörige Meßkurven HK13, HK23. Die jeweilige Meßkurve gibt insbesondere den Helligkeitswechsel von dunkel nach hell im jeweiligen Meßfenster wieder. Da der Stirnflächenrand SF21 erst das zweite Meßfenster MF2 überquert und dann erst später, d.h. nach Duchlaufen eines weiteren Verschiebeweges DZ3 das este Meßfenster MF13 überquert, sind die beiden Meßkurven HK23, HK13 um einen relativen Verschiebeweg DZ3 gegeneinander versetzt. Dieser Versatz DZ3 in Z-Richtung entspricht dem Stirnflächenversatz der Stirnfläche SF21 in Z-Richtung zwischen den beiden Meßfenstern MF13, MF23. Dadurch ist es bei Kenntnis des lateralen Querabstandes DX3 der beiden Meßfenster MF13, MF23 in vorteilhafter Weise ermöglicht, den Fehlerwinkel der Stirnfläche SF21 nach folgender Beziehung einzeln zu ermitteln:

$$WI21 = DZ3/ DX3$$

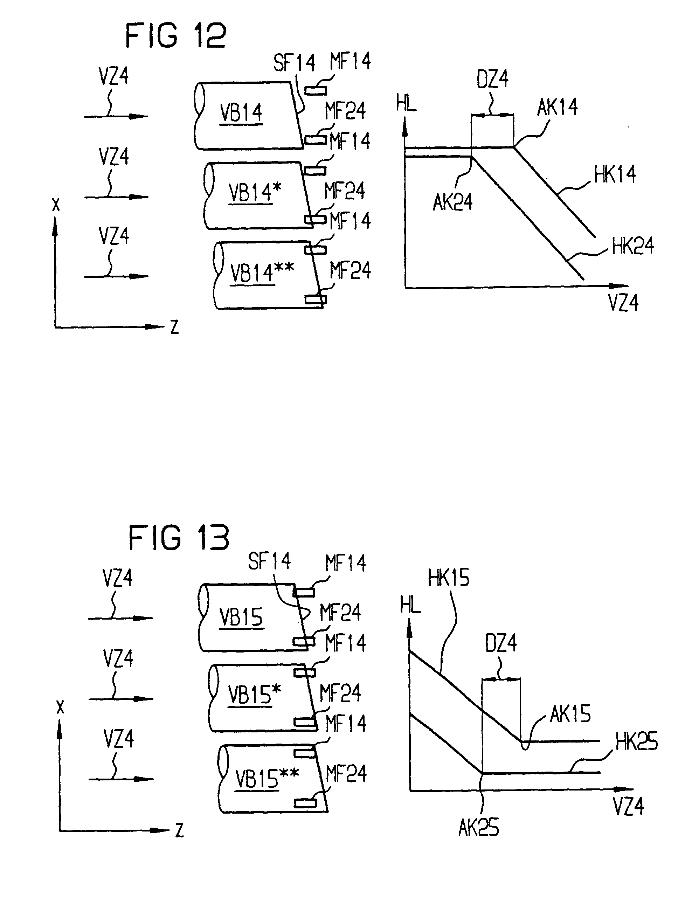

Die Figuren 12 mit 15 zeigen eine Zusammenstellung von Alternativen zur Durchführung des erfindungsgemäßen Verfahrens, mit denen jeweils Aussagen bzw. Informationen über die Stirnfläche einer einzelnen Lichtleitfaser gewonnen werden können. Die Figuren 12 mit 15 stellen dabei jeweils ein Lichtleitfaserende mit seinem Schattenbild in der X, Z-Ebene on Figur 2 dar. In jeder der Figuren 12 mit 15 ist das Faserschattenbild beispielhaft in drei verschiedenen Positionen in Bezug auf zwei Meßfenster dargestellt, um verschiedene Möglichkeiten von Relativbewegungen zwischen den Meßfenstern und der Faser veranschaulichen zu können. Die drei Faserabbildungen sind dabei jeweils untereinanderliegend gezeichnet. Zugleich ist jeweils in der rechten Bildhälfte der Figuren 12 mit 15 jeweils ein Helligkeitsdiagramm ensprechend Figur 11 dargestellt, um den Verlauf der Intensitätssummenwerte in den Meßfenstern während der unterschiedlichen Verschiebevorgänge besser veranschaulichen zu können. Die Figuren 12 mit 15 stellen die erste, linke Faser FE1 von Figur 2 mit einer anders ausgebildeten Stirnfläche dar, die gegenüber der von Figur 1 an der Faserlängsachse gespiegelt ist, d.h. jetzt steht die untere Faserecke weiter als die obere Faserecke vor. Die Faser FE1 ist also jetzt um 180° in Umfangsrichtung verdreht.

In der Figur 12 ist in der oberen Bildhälfte die Faserabbildung VB14 der ersten Faser soweit von zwei Meßfenstern MF14, MF24 entfernt, daß diese Meßfenster vollständig außerhalb der Faserabbildung liegen. In diesem Ausgangszustand ist die Faserabbildung mit VB14 bezeichnet. Die beiden Meßfenster MF14, MF24 sind in einer Zone rechts von der Stirnfläche SF14 der Faserabbildung VB14 festgelegt. Diese Zone liegt innerhalb eines Streifens der X,Z-Betrachtungsebene, der von den gedachten Verlängerungen der Längsseiten der Faserabbildung VB14 begrenzt wird. Die beiden Meßfenster sind jeweils denselben Z-Längsorten zugeordnet. Sie weisen jeweils etwa dieselbe Flächenform auf. Die beiden Meßfenster MF14, MF24 sind bezogen auf die Längsachse der Faserabbildung VB14 lateral um einen vorgebbaren Querabstand gegeneinander versetzt. Das erste Meßfenster MF14 ist der gedachten Verlängerung der oberen Längsseite der Faserabbildung VB14, das zweite Meßfenster MF24 der gedachten Verlängerung der unteren Längsseite der Faserabbildung VB14 zugeordnet. Die gesamte Detektionsfläche des jeweiligen Meßfensters MF14, MF24 wird in diesem Ausgangszustand vom Beleuchtungslicht getroffen, das heißt die Summe der Intensitätswerte des jeweiligen Meßfensters MF14 bzw. MF24 ist maximal. Ausgehend von dieser Ausgangsposition der Faserabbildung VB14 wird die Fser FE1 nun derart über die Meßfenster geschoben, daß jedes Meßfenster einzeln den Rand der abgebildeten Faserstirnfläche SF14 teilweise oder ganz überschreitet. In der Figur 12 wird die Faser in Z-Richtung auf die beiden Meßfenster MF14, MF24 zu verschoben, was durch einen Pfeil VZ4 angedeutet ist. Das sukzessive Vorrücken der Faserabbildung VB14 auf die ortsfesten Meßfenster MF14, MF24 zu ist durch zwei weitere Faserabbildungen unterhalb der ersten oberen Faserabbldung VB14 von Figur 12 angedeutet. In der Mittelposition ist die Faserabbildung mit VB14* bezeichnet. Dort schneidet die Faserstirnfläche lediglich das zweite Meßfenster MF24, während das Meßfenster MF14 vollständig außerhalb der Faserabbildung VB14* liegt. Sobald das Meßfenster MF24 den Faserstirnflächenrand SF14 überquert kommt es zu einem Abfall seines Intensitätssummenwertes. Mit anderen Worten ausgedrückt heißt das, daß seine Intensitätswerte von hell nach dunkel wechseln. Im Helligkeitsdiagramm weist die Meßkurve HK24 für das zweite Meßfenster deshalb eine Abknickstelle AK24 auf. Die Helligkeitskurve HK14 verläuft solange konstant, wie das zweite Meßfenster MF24 außerhalb der Faserabbildung VB14 liegt. Sobald der Faserstirnflächenrand SF14 in das Meßfeld des zweiten Meßfensters MF24 rückt, fällt dort die insgesamt auftreffende Lichtintensität, d.h. der Gesamtlichtmeßpegel ab. Beim weiteren Vorrücken der Faserbildung gerät schließlich der Stirnflächenrand SF14 auch auf die Meßfläche des ersten Meßfensters MF14. Sobald der Stirnflächenrand beginnt, auch das erste Meßfenster MF14 abzuschatten bzw. zu verdunkeln, fällt der vom ersten Meßfenster SF14 aufgenommene Lichtintensitätspegel ab. Die dem ersten Meßfenster MF14 zugeordnete Meßkurve HK14 weist deshalb ebenfalls eine Abknickstelle AK14 aufweist. Die Abknickstelle AK14 kennzeichnet den Wendepunkt, ab dem der weitgehend konstante Intensitätspegel abrupt absinkt. Der konstante Intensitätspegel hoher Helligkeit HL ergibt sich also bis zu demjenigen Verschiebeort der Faserabbildung, bei dem das erste Meßfenster noch ganz außerhalb der Faserabbildung VB14 liegt und noch nicht abgedunkelt wird. Je weiter die Faserabbildung in das erste Meßfenster MF14 hineingeschoben wird, desto niedriger wird der vom ersten Meßfenster MF14 erfaßte Lichtintensitätspegel. Der Versatz DZ4 zwischen den beiden Abknickstellen AK24, AK14 im Helligkeitsdiagramm gibt dann denjenigen Versatz in Z-Richtung an, um den die Stirnfläche zwischen den beiden Meßfenstern MF14, MF24 in Z-Richtung überhängt.

Informationen über eine einzelne Faserstirnfläche können weiterhin auch dadurch ermittelt werden, daß die zu untersuchende Faser bezüglich der Meßfenster MF14, MF24 derart positioniert wird, daß der Stirnflächenrand SF14 beide Meßfenster MF14, MF24 gleichzeitig schneidet. Diese Situation ist in der oberen Bildhälfte von Figur 13 dargestellt. Die Faserabbildung ist mit VB15 bezeichnet. Die Fasern werden nun in Z-Richtung ausgehend von dieser Ausgangsposition des Faserendes in Z-Richtung auf die Meßfenster MF14, MF24 nach rechts zu verschoben. Dabei dunkelt die Faserabbildung die beiden Meßfenster immer weiter ab. Mit anderen Worten ausgedrückt heißt das, daß die Meßfenster MF14, MF24 immer weiter in das Innere der Faserabbildung VB15 hineinwandern. Zwei weitere verschiedene Abdunklungszustände der beiden Meßfenster MF14, MF24 sind in der Figur 13 mit Hilfe zweier weiterer Abbildungen VB15*, VB15** der Faser veranschaulicht. Während bei der Faserabbildung VB15 von Figur 13 das este sowie das zweite Meßfenster MF14, MF24 noch teilweise hell sind, das heißt nur teilweise vom Schattenbild der Faser erfaßt werden, nimmt der Intensitätspegel der Meßfenster MF14, MF24 beim weiteren Vorrücken der Faserabbildung solange ab, bis schließlich jedes Meßfenster vollständig im Inneren der Faserabbildung VB15** zu liegen kommt. In der rechten Bildhälfte von Figur 13 ist für diesen Bewegungsvorgang der Faser gegenüber den Meßfenstern ein Helligkeitsdiagramm HL in Abhängigkeit vom Verschiebeweg VZ4 der Faser zusätzlich mit eingezeichnet. Der Intensitätsmeßpegelverlauf des ersten Meßfensters ist mit HK15, der Intensitätsmeßpegelverlauf des zweiten Meßfensters MF24 mit HK25 bezeichnet. Beide Meßkurven HK15, HK25 weisen jeweils eine Abknickstelle AK15, AK25 auf, ab der nur noch ein konstanter Helligkeitspegel gemessen werden kann. Dieser konstante Helligkeitspegel liegt dabei niedriger als die übrigen Intensitätspegel der Meßkurven HK15, HK25. Der Versatz DZ4 zwischen den beiden Abknickpunkten AK15, AK25 entspricht dann wieder dem gesuchten Faserstirnflächenversatz. Bei der Meßkurve HK25 tritt die Abknickstelle AK25 in Faservorschubrichtung VZ4 betrachtet früher als die Abknickstelle AK15 bei der Meßkurve AK15 auf, weil das zweite Meßfenster MF24 aufgrund der schiefen Faserstirnfläche früher vollständig im Inneren der Faserabbildung VB15** zu liegen kommt.

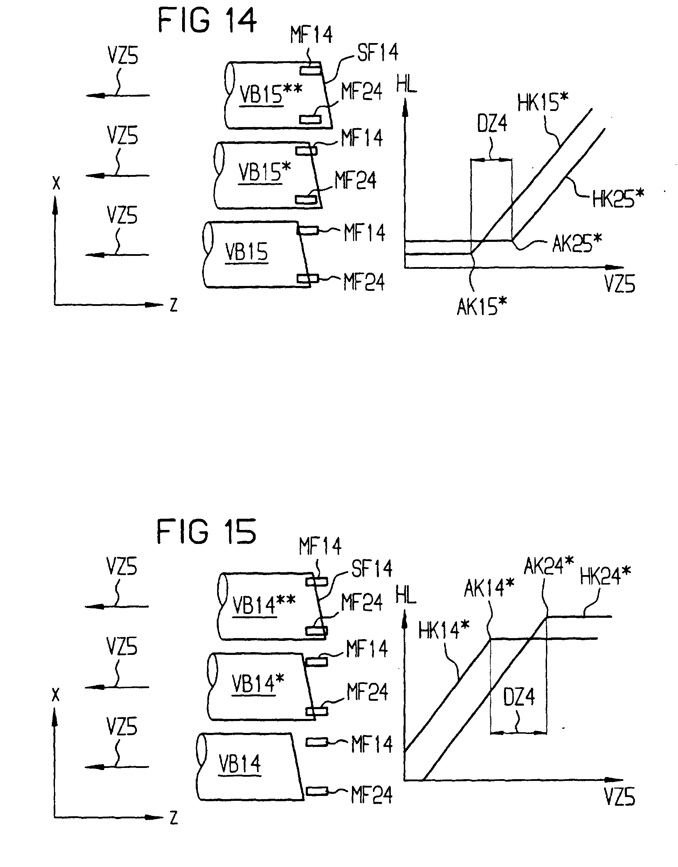

Weiterhin ist es auch ermöglicht, den Bewegungsvorgang zum Meßverfahren von Figur 13 umzukehren. Dazu wird die zu untersuchende Faser in einen derartigen Ausgangszustand gebracht wird, daß sich die beiden Meßfenster MF14, MF24 zunächst vollständig innerhalb der Faserabbildung VB15** befinden. Dann wird die Faser von den ortsfesten Meßfenstern MF14, MF24 nach links wegbewegt, was durch einen Verschiebepfeil VZ5 in Figur 14 angedeutet ist. Die drei Faserabbildungen mit den ihnen zugeordneten Meßfenstern sind dabei in umgekehrter Reihenfolge wie in Figur 13 dargestellt. Zunächst wandert der Stirnflächenrand SF14 über das erste Meßfenster MF14, da es näher am Faserstirnflächenrand SF14 in der Ausgangsposition VB15** liegt. Erst später während der Fortbewegung der Faserabbildung VB15 von den Meßfenstern wandert der Stirnflächenrand auch über das zweite Meßfenster MF24. Dies ist in der Figur 14 in der dritten Position der Faserabbildung VB15 dargestellt. Die mit Hilfe der Meßfenster MF14, MF24 abgenommenen Gesamt-Intensitätspegel während dieser Verschiebebewegung der Faser sind in der rechten Bildhälfte im Helligkeitsdiagramm dargestellt. Der Kurvenverlauf des Lichtpegels im ersten Meßfenster MF14 in Abhängigkeit vom Faservorschub VZ5 ist mit HK15*, der Intensitätspegelverlauf im zweiten Meßfenster mit HK25* bezeichnet. Die beiden Meßkurven HK15*, HK25* liegen bezüglich einer Parallelen zur Abszisse HL achssymmetrisch zu den Helligkeitskurven HK25, HK15 von Figur 13.

Figur 15 zeigt schließlich die kinematische Umkehrbewegung zur Faserverschiebung von Figur 12. In der Figur 15 sind die drei Faserabbildungen VB14, VB14*, VB14** von Figur 12 in umgekehrter Reihenfolge dargestellt. Die Faser ist also zunächst in eine solche Ausgangsposition gebracht, daß beide Meßfenster MF14, MF24 den Stirnflächenrand SF14 kreuzen. Die Faser wird dann entgegen der Richtung VZ4 von den beiden ortsfesten Meßfenstern weg nach links verschoben, das heißt wegbewegt, was durch den Verschiebepfeil VZ5 angedeutet ist. Zuerst kommt das erste Meßfenster MF14 vollständig außerhalb der Faserabbildung VB14* zu liegen. Erst nach einer zusätzlichen Faserverschiebung in Z-Richtung kommt auch zeitverzögert zum ersten Meßfenster MF14 das zweite Meßfenster MF24 vollständig auaßerhalb der Faserabbildung VB14 zu liegen. In der rechten Bildhälfte zeigt das Helligkeitsdiagramm für die beiden Meßfenster Meßkurven HK14*, HK24*, die bezüglich einer Parallelen zur Abszisse HL von Figur 12 achssymmetrisch zu den dortigen Intensitätsmeßkurven HK24, HK14 liegen. Die beiden Intensitätsmeßkurven HK14*, HK24* steigen zunächst mit zunehmendem Abstand der Faserabbildung von den Meßfenstern stetig bis zu einem Abknickpunkt AK14*, AK24* an, ab dem sie konstant weiter verlaufen. Die Abknickstellen AK14*, AK24* markieren also diejenigen Faserpositionen, ab denen das jeweilige Meßfenster MF14 bzw. MF24 vollständig außerhalb der Faserabbildung liegt und von dieser nicht mehr abgedunkelt wird. Aus dem Wegunterschied zwischen den beiden Abknickstellen AK14*, AK24* kann dann ebenfalls der Faserstirnflächenversatz DZ4 in Z-Richtung ermittelt werden.

Insgesamt betrachtet wird das jeweilige Faserende bezüglich mindestens zweier Meßfenster derart in Position gebracht, daß in der jeweiligen Betrachtungsebene der Rand ihrer abgebildeten Stirnfläche von jedem Meßfenster an unterschiedlichen Randstellen mindestens einmal während der Faserbewegung erfaßt oder überschritten wird. Während der Verschiebebewegung der Faser werden dabei die Intensitätswerte der Meßfenster fortlaufend aufgenommen und zur Auswertung bereitgestellt. Durch Vergleich der Intensitätswerte der Meßfenster können Informationen über Faserstirnfläche abgeleitet werden.

Vorzugsweise wird die Faser gegenüber ortsfest festgelegten Meßfenstern verschoben. Der Grund dafür ist insbesondere, daß in der Praxis die Faser mit einer wesentlich höheren Auflösung Schritt für Schritt vorwärts bewegt werden kann, als mit dem jeweiligen Meßfenster die Betrachtungsebene abgetastet werden kann.

Vorzugsweise kann die Faser ggf. auch kontinuierlich vorwärts bewegt werden und in vorgebbaren Zeitabständen die Intensitätswerte der Meßfenster ausgelesen und zur Auswertung bereitgestellt werden. Die Zeitabstände sind dabei zweckmäßigerweise derart gewählt, daß sich für die Faserbewegung korrespondierende Vorschubwege ergeben, die jeweils kleiner als der Abstand zweier Pixelelemente in Faserbewegungsrichtung sind.

Dadurch, daß mit Hilfe mindestens zweier Meßfenster der Faserstirnflächenrand an unterschiedlichen Randstellen quer zur Faserlängsrichtung mindestens einmal erfaßt oder überschritten wird, kann insbesondere der Fehlerwinkel der Stirnfläche einer einzelnen Faser ermittelt werden. Stehen sich zwei Faserenden gegenüber, so läßt sich der Gesamtfehlerwinkel zwischen den beiden Faserstirnflächen zum Beispiel nach den Meßprinzipien der Figuren 3 mit 6 ermitteln, während der Endflächenwinkel zum Beispiel der rechten, zweiten Faser nach einem der Bewegungsabläufe der Figuren 12 mit 15 ermittelt werden kann. Durch Subtraktion des Endflächenwinkels der ersten Faser vom Gesamtfehlerwinkel läßt sich dann auch der einzelne Endflächenwinkel der zweiten Faser bestimmen.

Gegebenenfalls kann es auch zweckmäßig sein, die Meßfenster gegenüber der jeweiligen ortsfesten Faserabbildung entsprechend zu verschieben, während die jeweilig zu messende Faser feststeht.

Wird die Verschiebung der Meßfenster lediglich durch entsprechendes Ansteuern der Pixelelemente der jeweiligen Aufnahmeeinrichtung wie z.B. VKY von Figur 2 mit Hilfe der Recheneinrichtung CPU durchgeführt, so geht dies in der Praxis allerdings auf Kosten der Meßgenauigkeit. Denn die Meßfenster können dann nur pixelweise, das heißt mit dem vorgegebenen Abstand zweier benachbarter Pixelelemente verschoben werden. Die Bewegung der Meßfenster gegenüber den Faserabbildungen ist allerdings besonders einfach zu realisieren, da dies ohne Mechanik allein in der Recheneinrichtung CPU durchgeführt werden kann. Dann können Positioniereinrichtungen zur Faserbewegung ggf. entfallen.

Gegebenenfalls kann es auch zweckmäßig sein, sowohl die jeweilige Faser als auch die Meßfenster relativ zueinander zu bewegen.

Im übrigen sind beliebige Relativbewegungen der jeweiligen Faser gegenüber den Meßfenstern in beleibige Raumrichtungen möglich, solange der jeweilige Faserstirnflächenrand an unterschiedlichen Randstellen von mindestens zwei Meßfenstern erfaßt wird und dabei jeweils die Intensitätsmeßwerte der Meßfenster aufgenommen und zur Auswertung bereitgestellt werden.

Zusätzlich oder unabhängig zu ihrem lateralen Versatz können die mindestens zwei Meßfenster wie z.B. MF12, MF22 von Figur 3 ggf. auch in Faserlängsrichtung betrachtet gegeneinander versetzt festgelegt werden. Dieser Offset, d.h. fest vorgegebene Längsversatz der Meßfenster in Faserlängsrichtung wird dann zweckmäßigerweise in den Verschiebeweg miteingerechnet, den die jeweilige Faser und die Meßfenster relativ zueinander in Faserlängsrichtung gemäß den Meßverfahren der Figuren 2 mit 15 machen.

**Patentansprüche**

1. Verfahren zur Gewinnung von Informationen über die Stirnfläche (SF21) mindestens eines Lichtleitfaserendes (FE2), wobei für das Faserende (FE2) in mindestens einer Betrachtungsebene (X, Z) eine Faserabbildung (VB21) erzeugt wird,
   **dadurch gekennzeichnet,**
   **daß** die Faser (FE2) bezüglich mindestens zweier Meßfenster (MF11, MF21) derart in Position gebracht wird, daß in der jeweiligen Betrachtungsebene (X,Z) der Rand ihrer abgebildeten Stirnfläche (SF21) von jedem Meßfenster (MF11, MF21) an unterschiedlichen Randstellen mindestens einmal erfaßt oder überschritten wird,
   **daß** dabei die Intensitätswerte (IT11, IT21) der Meßfenster (MF11, MF21) aufgenommen und zur Auswertung bereitgestellt werden,
   und **daß** durch Vergleich der Intensitätswerte (IT11, IT21) der Meßfenster (MF11, MF21) Informationen über die Faserstirnfläche (SF21) abgeleitet werden.

2. Verfahren nach Anspruch 1,
   **dadurch gekennzeichnet,**
   **daß** die mindestens zwei Meßfenster (MF11, MF21) innerhalb eines Streifens der jeweiligen Betrachtungsebene (X,Z) festgelegt werden, der von den gedachten Verlängerungen der Längsseiten der Faserabbildung (VB21) begrenzt wird.

3. Verfahren nach einem der vorhergehenden Ansprüche,
   **dadurch gekennzeichnet,**
   **daß** die Erstreckung des jeweiligen Meßfensters (MF11, MF21) in Faserlängsrichtung größer als quer zur Längsachse (ZA2) der Faser (FE2) gewählt wird.

4. Verfahren nach einem der vorhergehenden Ansprüche,
   **dadurch gekennzeichnet,**
   **daß** die zwei Meßfenster (MF11, MF21) bezogen auf die Längsachse (ZA2) der Faser (FE2) lateral um einen vorgebbaren Querabstand (DX) gegeneinander versetzt festgelegt werden.

5. Verfahren nach einem der vorhergehenden Ansprüche,
   **dadurch gekennzeichnet,**
   **daß** jeweils mindestens ein Meßfenster (MF11, MF21) innerhalb der beiden, in Faserlängsrichtung verlaufenden Randzonen der Faserabbildung (VB21) festgelegt wird.

6. Verfahren nach einem der vorhergehenden Ansprüche,
   **dadurch gekennzeichnet,**
   **daß** für die Meßfenster (MF11, MF21) etwa dieselbe Flächenform gewählt wird.

7. Verfahren nach einem der vorhergehenden Ansprüche,
   **dadurch gekennzeichnet,**
   **daß** die mindestens zwei Meßfenster (MF11, MF21) etwa denselben Längsorten entlang der Fasererstreckung zugeordnet werden.

8. Verfahren nach einem der vorhergehenden Ansprüche,
   **dadurch gekennzeichnet,**
   **daß** die Meßfenster (MF11, MF21) bezüglich der Faserlängsachse im wesentlichen achssymmetrisch zueinander festgelegt werden.

**9.** Verfahren nach einem der Ansprüche 1 bis 6,
**dadurch gekennzeichnet,**
**daß** die mindestens zwei Meßfenster (MF11, MF21) in Faserlängsrichtung betrachtet gegeneinander versetzt festgelegt werden.

**10.** Verfahren nach einem der vorhergehenden Ansprüche,
**dadurch gekennzeichnet,**
**daß** die Meßfenster (MF11, MF21) im wesentlichen parallel zueinander festgelegt werden.

**11.** Verfahren nach einem der vorhergehenden Ansprüche,
**dadurch gekennzeichnet,**
**daß** als Meßfenster (MF11) jeweils mindestens eine Meßzeile von lichtempfindlichen Elementen (P11 mit P1n) verwendet wird.

**12.** Verfahren nach einem der vorhergehenden Ansprüche,
**dadurch gekennzeichnet,**
**daß** die Faser (FE2) sowie die mindestens zwei Meßfenster (MF11, MF21) derart relativ zueinander positioniert werden,
**daß** der Rand der abgebildeten Faserstirnfläche (SF21) von mindestens zwei Meßfenstern (MF11, MF21) gleichzeitig erfaßt wird.

**13.** Verfahren nach Anspruch 12,
**dadurch gekennzeichnet,**
**daß** in dieser Position die örtlichen Intensitätsverteilungen (IT11, IT21) der von den Meßfenstern (MF11, MF21) erfaßten Bildausschnitte der Betrachtungsebene (X,Z) aufgenommen werden.

**14.** Verfahren nach Anspruch 13,
**dadurch gekennzeichnet,**
**daß** aus den örtlichen Intensitätsverteilungen (IT11, IT21) ein etwaiger axialer Längsversatz (DI21) des Stirnflächenrandes (SF21) zwischen dessen Schnittpunkten mit den beiden Meßfenstern (MF11, MF21) ermittelt wird.

**15.** Verfahren nach Anspruch 14,
**dadurch gekennzeichnet,**
**daß** ein etwaiger Fehlerwinkel (WI2) der Faserstirnfläche (SF21) nach der Beziehung
WI2 = arctan(DZ21/DX) ermittelt wird, wobei
WI2 der Fehlerwinkel der Faserstirnfläche (SF21),
DZ21 der axiale Längsversatz des Stirnflächenrandes (SF21) zwischen dessen Schnittpunkten mit den beiden Meßfenstern (MF11, MF21), und
DX der laterale Querabstand der Meßfenster (MF11, MF21) ist.

**16.** Verfahren nach einem der vorhergehenden Ansprüche,
**dadurch gekennzeichnet,**
**daß** die Faser (FE1) sowie die Meßfenster (MF14, MF24) soweit relativ gegeneinander verschoben werden, bis jedes Meßfenster (MF14, MF24) den Rand der abgebildeten Faserstirnfläche (SF14) teilweise oder ganz überschritten hat.

**17.** Verfahren nach Anspruch 16,
**dadurch gekennzeichnet,**
**daß** die Faser (FE1) gegenüber ortsfest festgelegten Meßfenstern (MF14, MF24) in Faserlängsrichtung verschoben wird.

**18.** Verfahren nach einem der Ansprüche 16 oder 17,
**dadurch gekennzeichnet,**
**daß** die Verschiebebewegung der Faser (FE2) mit einer größeren örtlichen Auflösung als die Abtastung der Faserabbildung (VB22) jeweils in den Meßfenstern (MF13, MF23) durchgeführt wird.

**19.** Verfahren nach einem der Ansprüche 16 bis 18,
**dadurch gekennzeichnet,**

**daß** die Intensitätswerte des jeweiligen Meßfensters (MF13, MF23) an den unterschiedlichen Verschiebeorten der Verschiebebewegung jeweils aufsummiert und als Summenwerte (HK13, HK23) festgehalten werden.

20. Verfahren nach Anspruch 19,
    **dadurch gekennzeichnet,**
    **daß** aus dem Verläufen (HK13, HK23) der Intensitätssummenwerte der Meßfenster (MF13, MF23) diejenigen Verschiebewege (VZ3) der Faser (FE2) ermittelt werden, bei denen jeweils etwa dieselbe Helligkeit eintritt.

21. Verfahren nach einem der vorhergehenden Ansprüche,
    **dadurch gekennzeichnet,**
    **daß** die Faser (FE2) zunächst in eine solche Ausgangsposition gebracht wird, daß die Meßfenster (MF13, MF23) vollständig innerhalb der Faserabbildung (VB21) liegen, und daß die Faser (FE2) ausgehend von dieser Ausgangsposition soweit über die Meßfenster geschoben wird, bis jedes Meßfenster (MF13, MF23) den Rand der abgebildeten Stirnfläche (SF21) teilweise oder ganz überschritten hat.

22. Verfahren nach Anspruch 21,
    **dadurch gekennzeichnet,**
    **daß** aus den Verläufen (HK13, HK23) der Intensitätssummenwerte der Meßfenster (MF13, MF23) jeweils diejenigen Verschiebewege (VZ3) der Faser (FE2) ermittelt werden, bei dem jeweils ein Helligkeitsanstieg einsetzt.

23. Verfahren nach einem der Ansprüche 1 bis 20,
    **dadurch gekennzeichnet,**
    **daß** die Faser (FE1) zunächst in eine solche Ausgangsposition gebracht wird, daß die Meßfenster (MF14, MF24) vollständig außerhalb der Faserabbildung (VB14) liegen, und daß die Faser (FE1) ausgehend von dieser Ausgangsposition soweit über die Meßfenster (MF14, MF24) geschoben wird, bis jedes Meßfenster den Rand der abgebildeten Faserstirnfläche (SF14) teilweise oder ganz überschritten hat.

24. Verfahren nach den Anspruch 23,
    **dadurch gekennzeichnet,**
    **daß** aus dem Verlauf der Intensitätssummenwerte (HK14, HK24) des jeweiligen Meßfensters (MF14, MF24) derjenige Verschiebeweg (VZ4) der Faser (FE2) ermittelt wird, bei dem ein Helligkeitsabfall einsetzt.

25. Verfahren zur Gewinnung von Informationen über den Spaltbereich (SB1) zweier sich gegenüberstehender Lichtleitfaserenden (FE1, FE2), wobei für die beiden Faserenden (FE1, FE2) in mindestens einer Betrachtungsebene (X, Y) Faserabbildungen (VB11, VB21) erzeugt werden, insbesondere nach einem der vorhergehenden Ansprüche,
    **dadurch gekennzeichnet,**
    **daß** die Fasern (FE1, FE2) bezüglich mindestens zweier Meßfenster (MF11, MF21) derart in Position zueinander gebracht werden, daß in der jeweiligen Betrachtungsebene (X,Z) die Ränder ihrer abgebildeten Stirnflächen (SF21) jeweils von mindestens zwei Meßfenstern (MF11, MF21) an unterschiedlichen Randstellen mindestens einmal erfaßt oder überschritten werden, daß dabei die Intensitätswerte (IT11, IT21) der Meßfenster (MF11, MF21) aufgenommen und zur Auswertung bereitgestellt werden, und daß durch Vergleich der Intensitätswerte (IT11, IT21) der Meßfenster (MF11, MF21) Informationen über beide Faserenden und/oder deren Spaltbereich abgeleitet werden.

26. Verfahren nach Anspruch 25,
    **dadurch gekennzeichnet,**
    **daß** innerhalb eines Streifens der jeweiligen Betrachtungsebene (X,Z), der von den gedachten Verlängerungen der Längsseiten der Faserabbildungen (VB11, VB21) begrenzt wird, mindestens zwei Meßfenster (MF11, MF21) festgelegt werden, die sich jeweils in Faserlängsrichtung erstrecken sowie bezogen auf die Längsachsen (ZA1, ZA2) der Fasern (FE1, FE2) lateral um einen vorgebbaren Querabstand (DX) gegeneinander versetzt sind.

27. Verfahren nach einem der Ansprüche 25 oder 26,
    **dadurch gekennzeichnet,**
    **daß** die Fasern (FE1, FE2) sowie die mindestens zwei Meßfenster (MF11, MF21) derart relativ zueinander in Position gebracht werden, daß von jedem Meßfenster (MF11, MF21) mindestens einmal ein Spaltbereich (SB11, SB21) zwischen den beiden Faserabbildungen (VB11, VB21) in Faserlängsrichtung überquert wird, und daß in dieser Position oder Positionen die Intensitätswerte der Meßfenster (MF11, MF21) aufgenommen und zur Auswertung bereitgestellt werden.

28. Vorrichtung zur Gewinnung von Informationen über die Stirnfläche (SF21) mindestens eines Lichtleitfaserendes (FE2) insbesondere nach einem der vorhergehenden Ansprüche, wobei für das Faserende (FE2) in mindestens einer Betrachtungsebene (X,Z) zur Erzeugung einer Faserabbildung (VB21) optische Abbildungsmittel (LQ1, OAY, VKY) vorgesehen sind,
   **dadurch gekennzeichnet,**
   **daß** für die Faser (FE2) Positioniermittel (SGZ) derart vorgesehen sind, daß in der jeweiligen Betrachtungsebene (X,Z) der Rand ihrer abgebildeten Stirnfläche (SF21) von mindestens zwei festgelegten Meßfenstern (MF11, MF21) an unterschiedlichen Stellen mindestens einmal erfaßbar oder überschreitbar ist, und daß eine Rechen- und Auswertevorrichtung (CPU) zur Aufnahme sowie Auswertung der Intensitätswerte (IT11, IT21) der Meßfenster (MF11, MF21) vorgesehen ist, die durch Vergleich der Intensitätswerte (IT11, IT21) der Meßfenster (MF11, MF21) Informationen über die Faserstirnfläche (SF21) ableitet.

## Claims

1. Method for obtaining information about the end surface (SF21) of at least one optical fibre end (FE2), with a fibre image (VB21) for the fibre end (FE2) being produced in at least one observation plane (X, Z),
   **characterized**
   **in that** the fibre (FE2) is moved to a position with respect to at least two measurement windows (MF11, MF21) such that, in the respective observation plane (X, Z), the edge of its imaged end surface (SF21) is detected or exceeded at least once by each measurement window (MF11, MF21) at different edge points,
   **in that**, in this case, the intensity values (IT11, IT21) of the measurement windows (MF11, MF12) are recorded and are provided for evaluation,
   and **in that** information about the fibre end surface (SF21) is derived by comparison of the intensity values (IT11, IT21) of the measurement windows (MF11, MF21).

2. Method according to Claim 1,
   **characterized**
   **in that** the at least two measurement windows (MF11, MF21) are defined within a strip of the respective observation plane (X, Z) which is bounded by the imaginary extensions of the longitudinal sides of the fibre image (VB21).

3. Method according to one of the preceding claims,
   **characterized**
   **in that** the extent of the respective measurement window (MF11, MF21) in the fibre longitudinal direction is chosen to be greater than transversely with respect to the longitudinal axis (ZA2) of the fibre (FE2).

4. Method according to one of the preceding claims,
   **characterized**
   **in that** the two measurement windows (MF11, MF21) are fixed laterally offset with respect to one another by a transverse distance (DX) which can be predetermined with respect to the longitudinal axis (ZA2) of the fibre (FE2).

5. Method according to one of the preceding claims,
   **characterized**
   **in that** at least one measurement window (MF11, MF21) is in each case fixed within the two edge zones of the fibre image (VB21) which run in the fibre longitudinal direction.

6. Method according to one of the preceding claims,
   **characterized**
   **in that** approximately the same surface shape is chosen for the measurement windows (MF11, MF21).

7. Method according to one of the preceding claims,
   **characterized**
   **in that** the at least two measurement windows (MF11, MF21) are associated approximately with the same longitudinal points along the fibre extent.

8. Method according to one of the preceding claims,

**characterized**

**in that** the measurement windows (MF11, MF21) are fixed essentially axially symmetrically with respect to one another with respect to the fibre longitudinal axis.

9. Method according to one of Claims 1 to 6,
**characterized**
**in that** the at least two measurement windows (MF11, MF21) are fixed offset with respect to one another when viewed in the fibre longitudinal.direction.

10. Method according to one of the preceding claims,
**characterized**
**in that** the measurement windows (MF11, MF21) are fixed essentially parallel to one another.

11. Method according to one of the preceding claims,
**characterized**
**in that** at least one measurement row of light-sensitive elements (P11 to P1n) is in each case used as a measurement window (MF11).

12. Method according to one of the preceding claims,
**characterized**
**in that** the fibre (FE2) as well as the at least two measurement windows (MF11, MF21) are moved to a position relative to one another such that the edge of the imaged fibre end surface (SF21) is detected at the same time by at least two measurement windows (MF11, MF21) .

13. Method according to Claim 12,
**characterized**
**in that**, in this position, the local intensity distributions (IT11, IT21) of the image details of the observation plane (X, Z) as detected by the measurement windows (MF11, MF21) are recorded.

14. Method according to Claim 13,
**characterized**
**in that** any axial longitudinal offset (DI21) of the end surface edge (SF21) between its intersections with the two measurement windows (MF11, MF21) is determined from the local intensity distributions (IT11, IT21).

15. Method according to Claim 14,
**characterized**
**in that** any angle error (WI2) of the fibre end surface (SF21) is determined using the relationship WI2 = arctan (DZ21/DX),
where WI2 is the error angle of the fibre end surface edge (SF21),
DZ21 is the axial longitudinal offset of the end surface (SF21) between its intersections with the two measurement windows (MF11, MF21), and
DX is the lateral transverse distance between the measurement windows (MF11, MF21).

16. Method according to one of the preceding claims,
**characterized**
**in that** the fibre (FE1) and the measurement windows (MF14, MF24) are shifted relatively to one another until each measurement window (MF14, MF24) has partially or entirely moved over the edge of the imaged fibre end surface (SF14).

17. Method according to Claim 16,
**characterized**
**in that** the fibre (FE1) is shifted in the fibre longitudinal direction with respect to measurement windows (MF14, MF24) which are fixed in position.

18. Method according to one of Claims 16 or 17,
**characterized**
**in that** the shifting movement of the fibre (FE2) is carried out with a greater position resolution than the sampling of the fibre image (VB22) in each of the measurement windows (MF13, MF23).

19. Method according to one of Claims 16 to 18,
    **characterized**
    **in that** the intensity values of the respective measurement window (MF13, MF23) are in each case added up at the different displacement locations of the displacement movement, and are recorded as sum values (HK13, HK23).

20. Method according to Claim 19,
    **characterized**
    **in that** the profiles (HK13, HK23) of the intensity sum values of the measurement windows (MF13, MF23) are used to determine those displacement movements (VZ3) of the fibre (FE2) at each of which approximately the same brightness occurs.

21. Method according to one of the preceding claims,
    **characterized**
    **in that** the fibre (FE2) is first of all moved to an initial position such that the measurement windows (MF13, MF23) are located completely within the fibre image (VB21) and in that the fibre (FE2) is shifted, starting from this initial position, over the measurement windows until each measurement window (MF13, MF23) are partially or entirely moved over the edge of the imaged end surface (SF21).

22. Method according to Claim 21,
    **characterized**
    **in that** the profiles (HK13, HK23) of the intensity sum values of the measurement windows (MF13, MF23) are in each case used to determine those displacement movements (VZ3) of the fibre (FE2) at each of which a brightness rise occurs.

23. Method according to one of Claims 1 to 20,
    **characterized**
    **in that** the fibre (FE1) is first of all moved to an initial position such that the measurement windows (MF14, MF24) are located completely outside the fibre image (VB14), and in that the fibre (FE1) is shifted, starting from this initial position, over the measurement windows (MF14, MF24) until each measurement window has partially or entirely moved over the edge of the imaged fibre end surface (SF14).

24. Method according to Claim 23,
    **characterized**
    **in that** the profile of the intensity sum values (HK14, HK24) for the respective measurement window (MF14, MF24) is used to determine that displacement movement (VZ4) of the fibre (FE2) at which a brightness drop occurs.

25. Method for obtaining information about the gap area (SB1) between the two mutually opposite optical fibre ends (FE1, FE2), with fibre images (VB11, VB21) being produced for the two fibre ends (FE1, FE2) in at least one observation plane (X, Y), in particular according to one of the preceding claims,
    **characterized**
    **in that** the fibres (FE1, FE2) are moved to a position with respect to one another with respect to at least two measurement windows (MF11, MF21) such that the edges of their imaged end surfaces (SF21) in the respective observation plane (X, Z) are in each case detected at least once, or are exceeded, by at least two measurement windows (MF11, MF21) at different edge points, in that, in this case, the intensity values (IT11, IT21) of the measurement windows (MF11, MF21) are recorded and are provided for evaluation, and in that information about both fibre ends and/or their gap area is derived by comparison of the intensity values (IT11, IT21) of the measurement windows (MF11, MF21).

26. Method according to Claim 25,
    **characterized**
    **in that** at least two measurement windows (MF11, MF21) are fixed within a strip of the respective observation plane (X, Z) which is bounded by the imaginary extensions of the longitudinal sides of the fibre images (VB11, VB21), which measurement windows (MF11, MF21) in each case extend in the fibre longitudinal direction and are offset laterally with respect to one another by a transverse distance (DX) which can be predetermined with respect to the longitudinal axes (ZA1, ZA2) of the fibres (FE1, FE2).

27. Method according to one of Claims 25 or 26,
    **characterized**

**in that** the fibres (FE1, FE2) as well as the at least two measurement windows (MF11, MF21) are moved to a position relative to one another such that each measurement window (MF11, MF21) at least once crosses over a gap area (SB11, SB21) between the two fibre images (VB11, VB21) in the fibre longitudinal direction, and in that, in this position or positions, the intensity values of the measurement windows (MF11, MF21) are recorded and are provided for evaluation.

28. Apparatus for obtaining information about the end surface (SF21) of at least one optical fibre end (FE2), in particular according to one of the preceding claims, with optical imaging means (LQ1, OAY, VKY) being provided for the fibre end (FE2) in at least one observation plane (X, Z) in order to produce a fibre image (VB21),
**characterized**
**in that** positioning means (SGZ) are provided for the fibre (FE2) such that the edge of its imaged end surface (SF21) of at least two fixed measurement windows (MF11, MF21) can be recorded or can be exceeded at least once at different points in the respective observation plane (X, Z), and in that a computation and evaluation apparatus (CPU) is provided for recording an evaluation of the intensity values (IT11, IT21) of the measurement windows (MF11, MF21), and derives information about the fibre end surface (SF21) by comparison of the intensity values (IT11, IT21) of the measurement windows (MF11, MF21).

**Revendications**

1. Procédé pour obtenir des informations sur la surface (SF21) frontale d'au moins une extrémité (FE2) de fibre optique, une reproduction(VB21) de la fibre étant produite pour l'extrémité (FE2) de la fibre dans au moins un plan (X, Z) d'examen,
**caractérisé**
**en ce que** l'on met la fibre (FE2) par rapport à au moins deux fenêtres (MF11, MF21) de mesure en une position telle
que dans chaque plan (X, Z) d'examen, le bord de sa surface (SF21) frontale reproduite est pris au moins une fois ou dépassé par chaque fenêtre (MF11, MF21) de mesure en des points différents du bord,
**en ce que** l'on enregistre les valeurs (IT11, IT21) d'intensité des fenêtres (MF11, MF21 ) de mesure et on en dispose pour l'évaluation
et **en ce que** en comparant les valeurs (IT11, IT21) d'intensité des fenêtres (MF11, MF21) de mesure, on déduit des informations sur la surface (SF21) frontale de la fibre.

2. Procédé de fabrication suivant la revendication 1,
**caractérisé,**
**en ce que** l'on fixe les au moins deux fenêtres (MF11, MF21) de mesure dans une bande du plan (X, Z) d'examen respectif, qui est délimitée par les prolongements imaginaires des grands côtés de la reproduction (VB21) de la fibre.

3. Procédé de fabrication suivant l'une des revendications précédentes,
**caractérisé**
**en ce que** l'on choisit l'étendue de la fenêtre (MF11, MF21) de mesure respective, de manière à ce qu'elle soit plus grande dans la direction longitudinale de la fibre que transversalement à l'axe (ZA2) longitudinal de la fibre (FE2).

4. Procédé de fabrication suivant l'une des revendications précédentes,
**caractérisé**
**en ce que** l'on fixe, rapportées à l'axe (ZA2) longitudinal de la fibre (FE2), les deux fenêtres (MF11, MF21) de mesure d'une manière décalée mutuellement, latéralement d'une distance (DX) transversale pouvant être prescrite.

5. Procédé de fabrication suivant l'une des revendications précédentes,
**caractérisé**
**en ce que** l'on fixe respectivement au moins une fenêtre (MF11, MF21) de mesure à l'intérieur des deux zones de bord, s'étendant dans la direction longitudinale de la fibre, de la reproduction (VB21) de la fibre.

6. Procédé suivant l'une des revendications précédentes,
**caractérisé**

**en ce que** l'on choisit pour les fenêtres (MF11, MF21) de mesure à peu près la même forme de surface.

7. Procédé de fabrication suivant l'une des revendications précédentes,
**caractérisé en ce que** l'on associe les au moins deux fenêtres (MF11, MF21) de mesure à peu près aux mêmes emplacements longitudinaux, le long de l'étendue de la fibre.

8. Procédé de fabrication suivant l'une des revendications précédentes,
**caractérisé en ce que** l'on fixe les fenêtres (MF11, MF21) de mesure de manière sensiblement symétrique l'une de l'autre par rapport à l'axe longitudinal de la fibre.

9. Procédé de fabrication, suivant l'une des revendications 1 à 6,
**caractérisé en ce que** l'on fixe de manière décalée mutuellement, considérées suivant la direction longitudinale de la fibre, les au moins deux fenêtres (MF11, MF21) de mesure.

10. Procédé de fabrication, suivant l'une des revendications précédentes,
**caractérisé en ce que** l'on fixe sensiblement parallèlement l'une à l'autre les fenêtres (MF11, MF211 ) de mesure.

11. Procédé de fabrication, suivant l'une des revendications précédentes,
**caractérisé en ce que** l'on utilise comme fenêtre (MF11) de mesure, respectivement au moins une ligne de mesure d'éléments (P11 à P1n) d'éléments photosensibles.

12. Procédé de fabrications suivant l'une des revendications précédentes,
**caractérisé en ce que** l'on met en position la fibre (FE2) ainsi que les au moins deux fenêtres (MF11, MF21) de mesure l'une par rapport aux autres de façon à ce que le bord de la surface (SF21) frontale de la fibre qui est reproduite soit pris simultanément par au moins deux fenêtres (MF11, MF21) de mesure.

13. Procédé suivant la revendication 12,
**caractérisé en ce que** dans cette position, on enregistre les répartitions (IT11, IT21) locales d'intensité des parties d'images, saisies par les fenêtres (MF11, MF21) de mesure, du plan (X, Z) d'examen.

14. Procédé suivant la revendication 13,
**caractérisé en ce que** l'on détermine à partir des répartitions (IT11, IT21) locales d'intensité, un décalage (DI21) longitudinal axial éventuel du bord (SF21) de la surface frontale entre ses points d'intersection avec les deux fenêtres (MF11, MF21 ) de mesure.

15. Procédé suivant la revendication 14,
**caractérisé en ce que** l'on détermine un angle (W12) éventuellement mauvais de la surface (SF21) frontale de la fibre par la relation WI2 = arctangente(DZ21/DX) dans lequel
WI2 est l'angle mauvais de la surface SF21 frontale de la fibre,
DZ21 est le décalage longitudinal axial du bord (SF21) de la surface frontale entre ses points d'intersections avec les deux fenêtres (MF11, MF21) de mesure , et
DX est la distance latérale transversale des fenêtres (MF11, MF21) de mesure.

16. Procédé suivant l'une des revendications précédentes,
**caractérisé en ce que** l'on déplace relativement l'une par rapport aux autres, la fibre (FE1) ainsi que les fenêtres (MF14, MF24) de mesure jusqu'à ce que chaque fenêtre (MF14, MF24) de mesure ait dépassé en tout en partie le bord de la surface (SF14) frontale de la fibre qui est reproduite.

17. Procédé suivant la revendication 16,
**caractérisé en ce que** l'on déplace dans la direction longitudinale de la fibre, la fibre (FE1) par rapport à des fenêtres (MF14, MF24) de mesure à poste fixe.

18. Procédé suivant l'une des revendications 16 ou 17,
**caractérisé en ce que** l'on effectue le mouvement de déplacement de la fibre (FE2) avec une résolution spatiale plus grande que le balayage de la reproduction (VB22) de la fibre respectivement dans les fenêtres (MF13, MF23) de mesure.

**19.** Procédé suivant l'une des revendications 16 à 18,

**caractérisé en ce que** l'on somme respectivement les valeurs d'intensité de la fenêtre (MF13, MF23) respective de mesure sur les emplacements différents du mouvement de déplacement et on les conserve sous la forme de valeurs (HK13, HK23) de somme.

**20.** Procédé de fabrication suivant la revendication 19,

**caractérisé en ce que** l'on détermine, à partir des courbes (HK13, HK23) des valeurs de somme d'intensité des fenêtres (MF13, MF23) de mesure, les déplacements (FZ3) de la fibre (FE2) pour lesquels il entre à peu près la même luminosité respectivement.

**21.** Procédé suivant l'une des revendications précédentes,

**caractérisé en ce que** l'on met la fibre (FE2) d'abord dans une position de départ telle que les fenêtres (MF13, MF23) de mesure se trouvent entièrement dans la reproduction (DB21) de la fibre et **en ce qu'**en partant de cette position de départ, on déplace la fibre (FE2) sur la fenêtre de mesure jusqu'à ce que chaque fenêtre (MF13, MF23) de mesure ait dépassé en tout ou partie le bord de la surface (SF21) frontale, qui est reproduite.

**22.** Procédé suivant la revendication 21,

**caractérisé en ce qu'**à partir des courbes (HK13, HK23) des valeurs de somme de l'intensité des fenêtres (MF13, MF23) de mesure, on détermine respectivement le trajet (VZ3) de déplacement de la fibre (FE2), pour lequel il s'établit respectivement une augmentation de la luminosité.

**23.** Procédé suivant l'une des revendications 1 à 20,

**caractérisé en ce que** l'on met la fibre (FE1) d'abord dans une position de départ telle que les fenêtres (MF14, MF24) de mesure se trouvent entièrement à l'extérieur de la reproduction (VB14) de la fibre et **en ce que** l'on déplace la fibre (FE1) en partant de cette position de départ sur les fenêtres (MF14, MF24) de mesure, jusqu'à ce que chaque fenêtre de mesure dépasse en tout en partie le bord de la surface (SF14) frontale de la fibre, qui est reproduite.

**24.** Procédé suivant la revendication 23,

**caractérisé en ce qu'**à partir de la courbe des valeurs (HK14, HK24) de somme de l'intensité de chaque fenêtre (MF14, MF24) de mesure, on détermine le trajet (BZ4) de déplacement de la fibre (FE2), pour lequel il s'établit une diminution de luminosité.

**25.** Procédé d'obtention d'informations sur la zone (SB21) de séparation entre deux extrémités (FE1, FE2) de fibre optique opposées en produisant pour les deux extrémités (FE1, FE2) de fibre, dans au moins un plan (X, Y) d'examen, des reproductions (VB11, VB21) de fibre, notamment suivant l'une des revendications précédentes, **caractérisé**

**en ce que** l'on met les fibres (FE1, FE2) par rapport à au moins deux fenêtres (MF11, MF21) de mesure en une position l'une par rapport à l'autre telle que dans le plan (X, Y) respectif d'examen, les bords de la surface (SF21) frontale, reproduite sont pris au moins une fois par au moins deux fenêtres (MF11, MF21) de mesure en des points du bord différents ou en dépassent, en ce que l'on enregistre des valeurs (IT11, IT21) d'intensité des fenêtres (MF11, MF21) de mesure et on en dispose pour l'évaluation et en ce qu'en comparant les valeurs (IT11, IT21) d'intensité des fenêtres (MF11, MF21) de mesure, on déduit des informations sur les deux extrémités de fibres et/ou sur leur zone de séparation.

**26.** Procédé suivant la revendication 25,

**caractérisé en ce que** on fixe à l'intérieur d'une bande des plans (X, Z) respectifs d'examen, qui sont délimités par les prolongements imaginaires des grands côtés des reproductions (VB11, VB21) de fibres au moins deux fenêtres (MF11, MF21) de mesure, qui s'étendent respectivement dans la direction longitudinale des fibres et qui sont mutuellement décalées par rapport aux axes (ZA1, ZA2) longitudinal des fibres (FE1, FE2) latéralement d'une distance (DX) transversale pouvant être prescrite.

**27.** Procédé suivant l'une des revendications 25 ou 26,

**caractérisé en ce que** l'on met les fibres (FE1, FE2) ainsi que les au moins deux fenêtres (MF11, MF21) de mesure en une position relative les unes par rapport aux autres de façon à ce qu'une zone (SB11, SB21) de séparation entre les deux reproductions (VB11, VB21) de fibre soit traversée au moins une fois par chaque fenêtre (MF11, MF21) de mesure et **en ce que** l'on enregistre dans cette position ou dans ces positions les valeurs d'intensité des fenêtres (MF11, MF21) de mesure et on en dispose pour l'évaluation.

**28.** Dispositif d'obtention d'informations sur la surface (21) frontale d'au moins une extrémité (FE2) de fibre optique notamment suivant l'une des revendications précédentes, dans lequel il est prévu pour l'extrémité (FE2) de fibre, dans au moins un plan (X, Y) d'examen pour la production d'une reproduction (VB21) de fibre, des moyens (LQ1, OAY, VKY) optiques de reproduction, **caractérisé**

**en ce qu'**il est prévu pour la fibre (FE2) des moyens (SGZ) de mise en position de façon à ce que, dans le plan (X, Z) respectif d'examen, le bord de sa surface (SF21) frontale reproduite puisse être pris au moins une fois ou dépassé en des points différents par au moins deux fenêtres (MF11, MF21) de mesure fixées et en ce qu'il est prévu un dispositif (CPU) de calcul et d'évaluation pour l'enregistrement ainsi que pour l'évaluation des valeurs (IT11, IT21) d'intensité des fenêtres (MF11, MF21) de mesure, qui déduit par comparaison des valeurs (IT11, IT21) d'intensité des fenêtres (MF11, MF21) de mesure des informations sur la surface (SF21) frontale de la fibre

# FIG 1

FIG 2

FIG 3

EP 0 899 539 B1

FIG 4

EP 0 899 539 B1

# FIG 5

VB11

KL

MF12

VB21

VZ1

TF11

TF21

X

Z

SF11    SF21    MF22

SP12

# FIG 6

VB11

MF12

VB21

MF22

VZ1*

EP 0 899 539 B1

# FIG 7

## FIG 8

## FIG 9

## FIG 10

VB21

MF13

VZ3

X

SF21

MF23

Z

## FIG 11

HL

HK23

HK13

VZ3

DZ3

# FIG 12

# FIG 13

## FIG 14

## FIG 15

## FIG 16

## FIG 17

## FIG 18

FIG 19